(19) Europäisches Patentamt / European Patent Office / Office européen des brevets

(11) **EP 3 962 099 A1**

(12) **EUROPEAN PATENT APPLICATION**

(43) Date of publication:
**02.03.2022 Bulletin 2022/09**

(21) Application number: **21193519.2**

(22) Date of filing: **27.08.2021**

(51) International Patent Classification (IPC):
**H04R 1/10** (2006.01)  **H04R 25/00** (2006.01)
**G02C 11/06** (2006.01)  **G06F 3/01** (2006.01)
**H04R 5/027** (2006.01)

(52) Cooperative Patent Classification (CPC):
**H04R 25/407; G02C 11/06; G06F 3/013;**
**H04R 1/1041;** H04R 1/1083; H04R 5/027;
H04R 2225/55; H04R 2430/20; H04R 2460/07

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.08.2020 EP 20193482**

(71) Applicant: **Oticon A/S**
**2765 Smørum (DK)**

(72) Inventors:
- **SKOGLUND, Martin**
  **DK-2765 Smørum (DK)**
- **FREDRIKSSON, Alfred**
  **DK-2765 Smørum (DK)**
- **WALLIN, Joakim**
  **DK-2765 Smørum (DK)**
- **GRIFUL, Sergi Rotger**
  **DK-2765 Smørum (DK)**

(74) Representative: **Demant**
**Demant A/S**
**Kongebakken 9**
**2765 Smørum (DK)**

(54) **HEARING DEVICVE ADAPTED FOR ORIENTATION**

(57) A hearing system comprising a hearing device, the hearing device being adapted for being worn by a user, the hearing system comprising
- an audio input unit configured to receive a multitude of audio signals comprising sound from a number of localized sound sources in an environment around the user, and
- a sensor unit configured to receive and/or provide sensor signals from one or more sensors, said one or more sensors being located in said environment and/or form part of said hearing system, and
- a first processor configured to generate and update over time data representative of a map of said environment of the user, said data being termed map data, said environment comprising a number of, stationary or mobile, landmarks, said landmarks comprising said number of localized sound sources, and said map data being representative of the physical location of said landmarks in the environment relative to the user, wherein the audio input unit comprises a microphone array comprising a multitude of microphones for picking up sound from said environment and providing respective microphone signals comprising sound from said number of localized sound sources and providing at least some of said multitude of audio signals, and wherein the hearing system comprising a head worn frame or structure whereon at least some, such as all, of said multitude of microphones are located.

FIGURE 6

EP 3 962 099 A1

**Description**

SUMMARY

The present disclosure relates to hearing devices, e.g. hearing aids, and in particular to a method to estimate a hearing aid (HA) user head orientation using inertial sensors and eye gaze data.

A hearing aid:

In an aspect of the present application, A hearing is provided.

The hearing aid may be adapted to provide a frequency dependent gain and/or a level dependent compression and/or a transposition (with or without frequency compression) of one or more frequency ranges to one or more other frequency ranges, e.g. to compensate for a hearing impairment of a user. The hearing aid may comprise a signal processor for enhancing the input signals and providing a processed output signal.

The hearing aid may comprise an output unit for providing a stimulus perceived by the user as an acoustic signal based on a processed electric signal. The output unit may comprise a number of electrodes of a cochlear implant (for a CI type hearing aid) or a vibrator of a bone conducting hearing aid. The output unit may comprise an output transducer. The output transducer may comprise a receiver (loudspeaker) for providing the stimulus as an acoustic signal to the user (e.g. in an acoustic (air conduction based) hearing aid). The output transducer may comprise a vibrator for providing the stimulus as mechanical vibration of a skull bone to the user (e.g. in a bone-attached or bone-anchored hearing aid).

The hearing aid may comprise an input unit for providing an electric input signal representing sound. The input unit may comprise an input transducer, e.g. a microphone, for converting an input sound to an electric input signal. The input unit may comprise a wireless receiver for receiving a wireless signal comprising or representing sound and for providing an electric input signal representing said sound. The wireless receiver may e.g. be configured to receive an electromagnetic signal in the radio frequency range (3 kHz to 300 GHz). The wireless receiver may e.g. be configured to receive an electromagnetic signal in a frequency range of light (e.g. infrared light 300 GHz to 430 THz, or visible light, e.g. 430 THz to 770 THz). The hearing aid may comprise a directional microphone system adapted to spatially filter sounds from the environment, and thereby enhance a target acoustic source among a multitude of acoustic sources in the local environment of the user wearing the hearing aid. The directional system is adapted to detect (such as adaptively detect) from which direction a particular part of the microphone signal originates. This can be achieved in various different ways as e.g. described in the prior art. In hearing aids, a microphone array beamformer is often used for spatially attenuating background noise sources. Many beamformer variants can be found in literature. The minimum variance distortionless response (MVDR) beamformer is widely used in microphone array signal processing. Ideally the MVDR beamformer keeps the signals from the target direction (also referred to as the look direction) unchanged, while attenuating sound signals from other directions maximally. The generalized sidelobe canceller (GSC) structure is an equivalent representation of the MVDR beamformer offering computational and numerical advantages over a direct implementation in its original form.

The hearing aid may comprise antenna and transceiver circuitry (e.g. a wireless receiver) for wirelessly receiving a direct electric input signal from another device, e.g. from an entertainment device (e.g. a TV-set), a communication device, a wireless microphone, or another hearing aid. The direct electric input signal may represent or comprise an audio signal and/or a control signal and/or an information signal. The hearing aid may comprise demodulation circuitry for demodulating the received direct electric input to provide the direct electric input signal representing an audio signal and/or a control signal e.g. for setting an operational parameter (e.g. volume) and/or a processing parameter of the hearing aid. In general, a wireless link established by antenna and transceiver circuitry of the hearing aid can be of any type. The wireless link is established between two devices, e.g. between an entertainment device (e.g. a TV) and the hearing aid, or between two hearing aids, e.g. via a third, intermediate device (e.g. a processing device, such as a remote control device, a smartphone, etc.). The wireless link is used under power constraints, e.g. in that the hearing aid may be constituted by or comprise a portable (typically battery driven) device. The wireless link is a link based on near-field communication, e.g. an inductive link based on an inductive coupling between antenna coils of transmitter and receiver parts. The wireless link may be based on far-field, electromagnetic radiation. The communication via the wireless link is arranged according to a specific modulation scheme, e.g. an analogue modulation scheme, such as FM (frequency modulation) or AM (amplitude modulation) or PM (phase modulation), or a digital modulation scheme, such as ASK (amplitude shift keying), e.g. On-Off keying, FSK (frequency shift keying), PSK (phase shift keying), e.g. MSK (minimum shift keying), or QAM (quadrature amplitude modulation), etc.

The communication between the hearing aid and the other device may be in the base band (audio frequency range, e.g. between 0 and 20 kHz). Preferably, communication between the hearing aid and the other device is based on some sort of modulation at frequencies above 100 kHz. Preferably, frequencies used to establish a communication link between the hearing aid and the other device is below 70 GHz, e.g. located in a range from 50 MHz to 70 GHz, e.g. above 300 MHz, e.g. in an ISM range above 300 MHz, e.g. in the 900 MHz range or in the 2.4 GHz range or in the 5.8 GHz range or in the 60 GHz range (ISM=Industrial, Scientific and Medical, such standardized ranges being e.g. defined by the International Telecommunication Union, ITU). The wireless link may be based on a standardized or proprietary technology. The wireless link may be based on Bluetooth technology (e.g. Bluetooth Low-Energy technology).

The hearing aid and/or the communication device may comprise an electrically small antenna. An 'electrically small antenna' is in the present context taken to mean that the spatial extension of the antenna (e.g. the maximum physical dimension in any direction) is much smaller than the wavelength $\lambda_{Tx}$ of the transmitted electric signal. The spatial extension of the antenna is a factor of 10, or 50 or 100 or more, or a factor of 1 000 or more, smaller than the carrier wavelength $\lambda_{Tx}$ of the transmitted signal. The hearing aid is a relatively small device. The term 'a relatively small device' is in the present context taken to mean a device whose maximum physical dimension (and thus of an antenna for providing a wireless interface to the device) is smaller than 10 cm, such as smaller than 5 cm. In the present context, 'a relatively small device' may be a device whose maximum physical dimension is much *smaller* (e.g. more than 3 times, such as more than 10 times smaller, such as more than 20 times small) than the operating wavelength of a wireless interface to which the antenna is intended (*ideally* an antenna for radiation of electromagnetic waves at a given frequency should be *larger* than or equal to half the wavelength of the radiated waves at that frequency). At 860 MHz, the wavelength in vacuum is around 35 cm. At 2.4 GHz, the wavelength in vacuum is around 12 cm. The hearing aid may have a maximum outer dimension of the order of 0.15 m (e.g. a handheld mobile telephone). The hearing aid may have a maximum outer dimension of the order of 0.08 m (e.g. a headset). The hearing aid may have a maximum outer dimension of the order of 0.04 m (e.g. a hearing instrument).

The hearing aid may be or form part of a portable (i.e. configured to be wearable) device, e.g. a device comprising a local energy source, e.g. a battery, e.g. a rechargeable battery. The hearing aid may e.g. be a low weight, easily wearable, device, e.g. having a total weight less than 100 g.

The hearing aid may comprise a forward or signal path between an input unit (e.g. an input transducer, such as a microphone or a microphone system and/or direct electric input (e.g. a wireless receiver)) and an output unit, e.g. an output transducer. The signal processor may be located in the forward path. The signal processor may be adapted to provide a frequency dependent gain according to a user's particular needs. The hearing aid may comprise an analysis path comprising functional components for analyzing the input signal (e.g. determining a level, a modulation, a type of signal, an acoustic feedback estimate, etc.). Some or all signal processing of the analysis path and/or the signal path may be conducted in the frequency domain. Some or all signal processing of the analysis path and/or the signal path may be conducted in the time domain.

An analogue electric signal representing an acoustic signal may be converted to a digital audio signal in an analogue-to-digital (AD) conversion process, where the analogue signal is sampled with a predefined sampling frequency or rate $f_s$, $f_s$ being e.g. in the range from 8 kHz to 48 kHz (adapted to the particular needs of the application) to provide digital samples $x_n$ (or x[n]) at discrete points in time $t_n$ (or n), each audio sample representing the value of the acoustic signal at $t_n$ by a predefined number $N_b$ of bits, $N_b$ being e.g. in the range from 1 to 48 bits, e.g. 24 bits. Each audio sample is hence quantized using $N_b$ bits (resulting in $2^{Nb}$ different possible values of the audio sample). A digital sample x has a length in time of $1/f_s$, e.g. 50 $\mu$s, for $f_s$ = 20 kHz. A number of audio samples may be arranged in a time frame. A time frame may comprise 64 or 128 audio data samples. Other frame lengths may be used depending on the practical application.

The hearing aid may comprise an analogue-to-digital (AD) converter to digitize an analogue input (e.g. from an input transducer, such as a microphone) with a predefined sampling rate, e.g. 20 kHz. The hearing aids may comprise a digital-to-analogue (DA) converter to convert a digital signal to an analogue output signal, e.g. for being presented to a user via an output transducer.

The hearing aid, e.g. the input unit, and or the antenna and transceiver circuitry comprise(s) a TF-conversion unit for providing a time-frequency representation of an input signal. The time-frequency representation may comprise an array or map of corresponding complex or real values of the signal in question in a particular time and frequency range. The TF conversion unit may comprise a filter bank for filtering a (time varying) input signal and providing a number of (time varying) output signals each comprising a distinct frequency range of the input signal. The TF conversion unit may comprise a Fourier transformation unit for converting a time variant input signal to a (time variant) signal in the (time-)frequency domain. The frequency range considered by the hearing aid from a minimum frequency $f_{min}$ to a maximum frequency $f_{max}$ may comprise a part of the typical human audible frequency range from 20 Hz to 20 kHz, e.g. a part of the range from 20 Hz to 12 kHz. Typically, a sample rate $f_s$ is larger than or equal to twice the maximum frequency $f_{max}$, $f_s \geq 2f_{max}$. A signal of the forward and/or analysis path of the hearing aid may be split into a number $NI$ of frequency bands (e.g. of uniform width), where $NI$ is e.g. larger than 5, such as larger than 10, such as larger than 50, such as larger than 100, such as larger than 500, at least some of which are processed individually. The hearing aid may be adapted to process a signal of the forward and/or analysis path in a number $NP$ of different frequency channels ($NP \leq NI$). The frequency channels may be uniform or non-uniform in width (e.g. increasing in width with frequency), overlapping or non-overlapping.

The hearing aid may be configured to operate in different modes, e.g. a normal mode and one or more specific modes, e.g. selectable by a user, or automatically selectable. A mode of operation may be optimized to a specific acoustic situation or environment. A mode of operation may include a low-power mode, where functionality of the hearing aid is reduced (e.g. to save power), e.g. to disable wireless communication, and/or to disable specific features of the hearing aid.

The hearing aid may comprise a number of detectors configured to provide status signals relating to a current physical environment of the hearing aid (e.g. the current acoustic environment), and/or to a current state of the user wearing the hearing aid, and/or to a current state or mode of operation of the hearing aid. Alternatively or additionally, one or more detectors may form part of an *external* device in communication (e.g. wirelessly) with the hearing aid. An external device may e.g. comprise another hearing aid, a remote control, and audio delivery device, a telephone (e.g. a smartphone), an external sensor, etc.

One or more of the number of detectors may operate on the full band signal (time domain). One or more of the number of detectors may operate on band split signals ((time-) frequency domain), e.g. in a limited number of frequency bands.

The number of detectors may comprise a level detector for estimating a current level of a signal of the forward path. The detector may be configured to decide whether the current level of a signal of the forward path is above or below a given (L-)threshold value. The level detector operates on the full band signal (time domain). The level detector operates on band split signals ((time-) frequency domain).

The hearing aid may comprise a voice activity detector (VAD) for estimating whether or not (or with what probability) an input signal comprises a voice signal (at a given point in time). A voice signal is in the present context taken to include a speech signal from a human being. It may also include other forms of utterances generated by the human speech system (e.g. singing). The voice activity detector unit is adapted to classify a current acoustic environment of the user as a VOICE or NO-VOICE environment. This has the advantage that time segments of the electric microphone signal comprising human utterances (e.g. speech) in the user's environment can be identified, and thus separated from time segments only (or mainly) comprising other sound sources (e.g. artificially generated noise). The voice activity detector may be adapted to detect as a VOICE also the user's own voice. Alternatively, the voice activity detector may be adapted to exclude a user's own voice from the detection of a VOICE.

The hearing aid may comprise an own voice detector for estimating whether or not (or with what probability) a given input sound (e.g. a voice, e.g. speech) originates from the voice of the user of the system. A microphone system of the hearing aid may be adapted to be able to differentiate between a user's own voice and another person's voice and possibly from NON-voice sounds.

The number of detectors may comprise a movement detector, e.g. an acceleration sensor. The movement detector is configured to detect movement of the user's facial muscles and/or bones, e.g. due to speech or chewing (e.g. jaw movement) and to provide a detector signal indicative thereof.

The hearing aid may comprise a classification unit configured to classify the current situation based on input signals from (at least some of) the detectors, and possibly other inputs as well. In the present context 'a current situation' is taken to be defined by one or more of

a) the physical environment (e.g. including the current electromagnetic environment, e.g. the occurrence of electromagnetic signals (e.g. comprising audio and/or control signals) intended or not intended for reception by the hearing aid, or other properties of the current environment than acoustic);
b) the current acoustic situation (input level, feedback, etc.), and
c) the current mode or state of the user (movement, temperature, cognitive load, etc.);
d) the current mode or state of the hearing aid (program selected, time elapsed since last user interaction, etc.) and/or of another device in communication with the hearing aid.

The classification unit may be based on or comprise a neural network, e.g. a rained neural network.

The hearing aid may comprise an acoustic (and/or mechanical) feedback control (e.g. suppression) or echo-cancelling system. Acoustic feedback occurs because the output loudspeaker signal from an audio system providing amplification of a signal picked up by a microphone is partly returned to the microphone via an acoustic coupling through the air or other media. The part of the loudspeaker signal returned to the microphone is then re-amplified by the system before it is re-presented at the loudspeaker, and again returned to the microphone. As this cycle continues, the effect of acoustic feedback becomes audible as artifacts or even worse, howling, when the system becomes unstable. The problem appears typically when the microphone and the loudspeaker are placed closely together, as e.g. in hearing aids or other audio systems. Some other classic situations with feedback problems are telephony, public address systems, headsets, audio conference systems, etc. Adaptive feedback cancellation has the ability to track feedback path changes over time. It is based on a linear time invariant filter to estimate the feedback path but its filter weights are updated over time. The filter update may be calculated using stochastic gradient algorithms, including some form of the Least Mean Square (LMS) or the Normalized LMS (NLMS) algorithms. They both have the property to minimize the error signal in the mean square sense with the NLMS additionally normalizing the filter update with respect to the squared Euclidean norm of some reference signal.

The feedback control system may comprise a feedback estimation unit for providing a feedback signal representative of an estimate of the acoustic feedback path, and a combination unit, e.g. a subtraction unit, for subtracting the feedback signal from a signal of the forward path (e.g. as picked up by an input transducer of the hearing aid). The feedback estimation unit may comprise an update part comprising an adaptive algorithm and a variable filter part for filtering an input signal according to variable filter coefficients determined by said adaptive algorithm, wherein the update part is configured to update said filter coefficients of the variable filter part with a configurable update frequency $f_{upd}$. The hearing aid is configured to provide that the configurable update frequency $f_{upd}$ has a maximum value $f_{upd,max}$. The maximum value $f_{upd,max}$ is a fraction of a sampling frequency $f_s$ of an AD converter of the hearing aid ($f_{upd,max} = f_s/D$).

The update part of the adaptive filter may comprise an adaptive algorithm for calculating updated filter coefficients for being transferred to the variable filter part of the adaptive filter. The timing of calculation and/or transfer of updated filter coefficients from the update part to the variable filter part may be controlled by the activation control unit. The timing of the update (e.g. its specific point in time, and/or its update frequency) may preferably be influenced by various properties of the signal of the forward path. The update control scheme is preferably supported by one or more detectors of the hearing aid, preferably included in a predefined criterion comprising the detector signals.

The hearing aid may further comprise other relevant functionality for the application in question, e.g. compression, noise reduction, etc.

The hearing aid may comprise a hearing instrument, e.g. a hearing instrument adapted for being located at the ear or fully or partially in the ear canal of a user, e.g. a headset, an earphone, an ear protection device or a combination thereof. The hearing assistance system may comprise a speakerphone (comprising a number of input transducers and a number of output transducers, e.g. for use in an audio conference situation), e.g. comprising a beamformer filtering unit, e.g. providing multiple beamforming capabilities.

Use:

In an aspect, use of a hearing aid as described above, in the 'detailed description of embodiments' and in the claims, is moreover provided. Use may be provided in a system comprising audio distribution, e.g. a system comprising a microphone and a loudspeaker in sufficiently close proximity of each other to cause feedback from the loudspeaker to the microphone during operation by a user. Use may be provided in a system comprising one or more hearing aids (e.g. hearing instruments), headsets, ear phones, active ear protection systems, etc., e.g. in handsfree telephone systems, teleconferencing systems (e.g. including a speakerphone), public address systems, karaoke systems, classroom amplification systems, etc.

A computer readable medium or data carrier:

In an aspect, a tangible computer-readable medium (a data carrier) storing a computer program comprising program code means (instructions) for causing a data processing system (a computer) to perform (carry out) at least some (such as a majority or all) of the (steps of the) method described above, in the 'detailed description of embodiments' and in the claims, when said computer program is executed on the data processing system is furthermore provided by the present application.

By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Other storage media include storage in DNA (e.g. in synthesized DNA strands). Combinations of the above should also be included within the scope of computer-readable media. In addition to being stored on a tangible medium, the computer program can also be transmitted via a transmission medium such as a wired or wireless link or a network, e.g. the Internet, and loaded into a data processing system for being executed at a location different from that of the tangible medium.

A computer program:

A computer program (product) comprising instructions which, when the program is executed by a computer, cause the computer to carry out (steps of) the method described above, in the 'detailed description of embodiments' and in the claims is furthermore provided by the present application.

A data processing system:

In an aspect, a data processing system comprising a processor and program code means for causing the processor to perform at least some (such as a majority or all) of the steps of the method described above, in the 'detailed description of embodiments' and in the claims is furthermore provided by the present application.

A hearing system:

In a further aspect, a hearing system comprising a hearing aid as described above, in the 'detailed description of embodiments', and in the claims, AND an auxiliary device is moreover provided.
The hearing system is adapted to establish a communication link between the hearing aid and the auxiliary device to provide that information (e.g. control and status signals, possibly audio signals) can be exchanged or forwarded from one to the other.
The auxiliary device may comprise a remote control, a smartphone, or other portable or wearable electronic device, such as a smartwatch or the like.
The auxiliary device may be constituted by or comprise a remote control for controlling functionality and operation of the hearing aid(s). The function of a remote control is implemented in a smartphone, the smartphone possibly running an APP allowing to control the functionality of the audio processing device via the smartphone (the hearing aid(s) comprising an appropriate wireless interface to the smartphone, e.g. based on Bluetooth or some other standardized or proprietary scheme).
The auxiliary device may be constituted by or comprise an audio gateway device adapted for receiving a multitude of audio signals (e.g. from an entertainment device, e.g. a TV or a music player, a telephone apparatus, e.g. a mobile telephone or a computer, e.g. a PC) and adapted for selecting and/or combining an appropriate one of the received audio signals (or combination of signals) for transmission to the hearing aid.
The auxiliary device may be constituted by or comprise another hearing aid. The hearing system may comprise two hearing aids adapted to implement a binaural hearing system, e.g. a binaural hearing aid system.

An APP:

In a further aspect, a non-transitory application, termed an APP, is furthermore provided by the present disclosure. The APP comprises executable instructions configured to be executed on an auxiliary device to implement a user interface for a hearing aid or a hearing system described above in the 'detailed description of embodiments', and in the claims. The APP is configured to run on cellular phone, e.g. a smartphone, or on another portable device allowing communication with said hearing aid or said hearing system.

Definitions:

In the present context, a hearing aid, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears, acoustic signals transferred as mechanical vibrations to the user's inner ears through the bone structure of the user's head and/or through parts of the middle ear as well as electric signals transferred directly or indirectly to the cochlear nerve of the user.
The hearing aid may be configured to be worn in any known way, e.g. as a unit arranged behind the ear with a tube leading radiated acoustic signals into the ear canal or with an output transducer, e.g. a loudspeaker, arranged close to or in the ear canal, as a unit entirely or partly arranged in the pinna and/or in the ear canal, as a unit, e.g. a vibrator, attached to a fixture implanted into the skull bone, as an attachable, or entirely or partly implanted, unit, etc. The hearing aid may comprise a single unit or several units communicating (e.g. acoustically, electrically or optically) with each other. The loudspeaker may be arranged in a housing together with other components of the hearing aid or may be an external unit in itself (possibly in combination with a flexible guiding element, e.g. a dome-like element).
More generally, a hearing aid comprises an input transducer for receiving an acoustic signal from a user's surroundings and providing a corresponding input audio signal and/or a receiver for electronically (i.e. wired or wirelessly) receiving an input audio signal, a (typically configurable) signal processing circuit (e.g. a signal processor, e.g. comprising a configurable (programmable) processor, e.g. a digital signal processor) for processing the input audio signal and an output unit for providing an audible signal to the user in dependence on the processed audio signal. The signal processor may be adapted to process the input signal in the time domain or in a number of frequency bands. In some hearing aids, an amplifier and/or compressor may constitute the signal processing circuit. The signal processing circuit typically comprises one or more (integrated or separate) memory elements for executing programs and/or for storing parameters used (or potentially used) in the processing and/or for storing information relevant for the function of the hearing aid and/or for storing information (e.g. processed information, e.g. provided by the signal processing circuit), e.g. for use in connection with an interface to a user and/or an interface to a programming device. In some hearing aids, the output unit may comprise an output transducer, such as e.g. a loudspeaker for providing an air-borne acoustic signal or a vibrator for providing a structure-borne or liquid-borne acoustic signal. In some hearing aids, the output unit may comprise one or more output electrodes for providing electric signals (e.g. to a multi-electrode array) for electrically stimulating the cochlear nerve (cochlear implant type hearing aid).

In some hearing aids, the vibrator may be adapted to provide a structure-borne acoustic signal transcutaneously or percutaneously to the skull bone. In some hearing aids, the vibrator may be implanted in the middle ear and/or in the inner ear. In some hearing aids, the vibrator may be adapted to provide a structure-borne acoustic signal to a middle-ear bone and/or to the cochlea. In some hearing aids, the vibrator may be adapted to provide a liquid-borne acoustic signal to the cochlear liquid, e.g. through the oval window. In some hearing aids, the output electrodes may be implanted in the cochlea or on the inside of the skull bone and may be adapted to provide the electric signals to the hair cells of the cochlea, to one or more hearing nerves, to the auditory brainstem, to the auditory midbrain, to the auditory cortex and/or to other parts of the cerebral cortex.

A hearing aid may be adapted to a particular user's needs, e.g. a hearing impairment. A configurable signal processing circuit of the hearing aid may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing aid via an interface to a programming device (fitting system) and used by a processing algorithm executed by the configurable signal processing circuit of the hearing aid.

A 'hearing system' refers to a system comprising one or two hearing aids, and a 'binaural hearing system' refers to a system comprising two hearing aids and being adapted to cooperatively provide audible signals to both of the user's ears. Hearing systems or binaural hearing systems may further comprise one or more 'auxiliary devices', which communicate with the hearing aid(s) and affect and/or benefit from the function of the hearing aid(s). Such auxiliary devices may include at least one of a remote control, a remote microphone, an audio gateway device, an entertainment device, e.g. a music player, a wireless communication device, e.g. a mobile phone (such as a smartphone) or a tablet or another device, e.g. comprising a graphical interface.. Hearing aids, hearing systems or binaural hearing systems may e.g. be used for compensating for a hearing-impaired person's loss of hearing capability, augmenting or protecting a normal-hearing person's hearing capability and/or conveying electronic audio signals to a person. Hearing aids or hearing systems may e.g. form part of or interact with public-address systems, active ear protection systems, handsfree telephone systems, car audio systems, entertainment (e.g. TV, music playing or karaoke) systems, teleconferencing systems, classroom amplification systems, etc.

Embodiments of the disclosure may e.g. be useful in audiological applications such as CI rehabilitation, eye steering (combination with EarEEG), sound source location and balance monitoring.

BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:

FIG. 1a-b     shows an embodiment according to the present disclosure,

FIG. 1.1a-b     shows an embodiment according to the present disclosure,

FIG. 2.1-2     shows an embodiment according to the present disclosure,

FIG. 3.1-6     shows an embodiment according to the present disclosure,

FIG. 4.1-4-b     shows an embodiment according to the present disclosure,

FIG. 5.1-37     shows an embodiment according to the present disclosure,

FIG. 6         shows an embodiment according to the present disclosure,

FIG. 7a-b       shows an embodiment according to the present disclosure,

FIG. 8a-b       shows an embodiment according to the present disclosure,

FIG. 9a-c       shows an embodiment according to the present disclosure.

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

## DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

The present application relates to the field of hearing aids. Further, it relates to a method to estimate a hearing aid (HA) user head orientation using inertial sensors and eye gaze data

Current hearing aids do not have access to the orientation of the head. Head orientation can be extremely valuable in certain use cases: balance monitoring/prediction, rehabilitation for CI users, eye-steering of beamformers (EarEEG applications) and noise suppression.

Inertial sensors (IMU), 3-axis accelerometers and gyroscopes, either within a HA or an external device mounted to the user's head allows estimation of head linear acceleration, head attitude (pitch and roll) head rotational velocity and short time head orientation in the horizontal plane (yaw). Since gyroscopes contain bias and noise it is not possible to estimate yaw by means of integration and therefore other supporting data is needed. Both gyroscopes and accelerometers are small enough devices and not so much power consuming.

By means of two accelerometers (one for each ear) and some suitable signal processing a virtual gyroscope is provided.

Eye gaze data providing measures of user's gaze angle in the horizontal plane with respect to the head can be obtained by eye-tracking glasses or EarEEG measurements.

Utilization of eye gaze patterns, such as fixations (periods of no, or very small, eye movements), vestibulo-ocular reflex (VOR), VOR is the counter eye movements when the head is rotating which is used to produce a stable image on the retina of the part in the visual scene to which the eyes are pointing, enables bias estimation and drift correction in yaw estimation. See e.g. (Holmqvist, 2015) for more information.

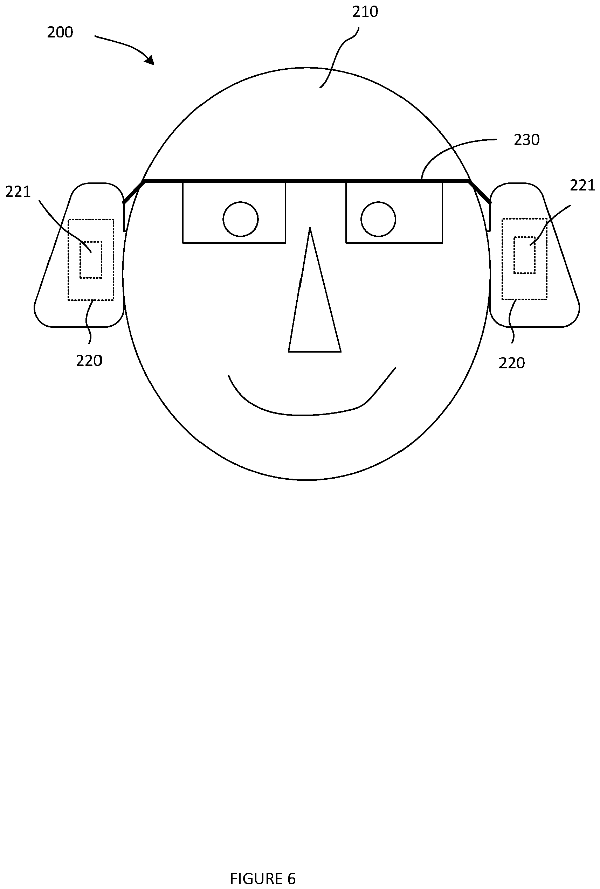

FIG. 6 shows a hearing system 200, comprising binaural hearing aid 220 with IMUs 221 and an eye-tracking device in the form of glasses 230.. The system 200 comprises earEEGs (not shown) in each ear canal and/or an eye-tracking device 230.. This is because the gaze parameters we need to extract from this invention can either come from an eye tracker device (e.g. glasses) or from EarEEGs. In fig. 6, a user is shown with the glasses 230, however, a user could use only earEEGs (not shown) instead of the glasses 230. The glasses 230 could be regular glasses or sunglasses. The IMU 221 comprise at least one accelerometer. The IMU 221 can be connected to the Has noise reduction system.

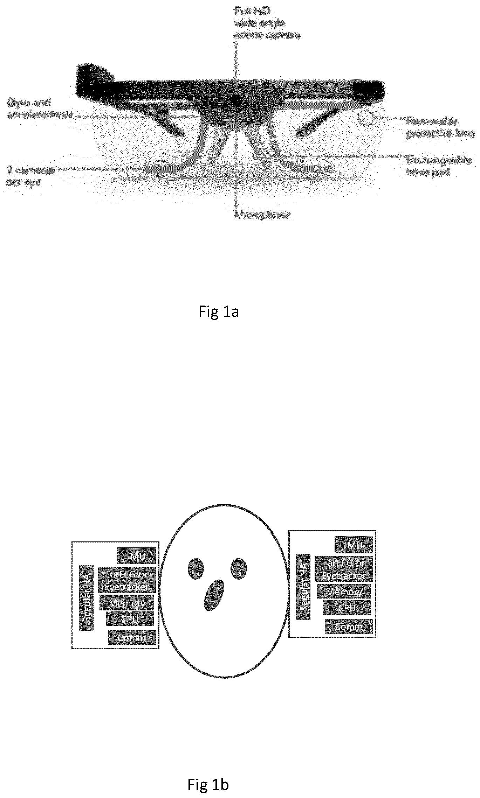

FIG. 1b shows an overview of the hearing aid system 200. The different components of the system described can be seen in FIG. 1b. Each Hearing Devices has a regular HA (microphones, recievers, CPU, memory etc.) and are extended with some additional sensor: inertial sensors (IMUs) and EarEEG/Eyetracker (for gaze estimation). Sensor data from motion (IMU) and gaze (EarEEG/Eyetracker) are sent to the memory unit that stores these data. If needed be, data from both HAs can be shared using the communication module (Comm.). Sharing data across HAs is needed if we want to estimate angular velocity from only accelerometers. Then the CPU unit pick the data from the memory unit and applies the signal processing methods explained below. From this signal processing methods, we then get an estimated on the head orientation that can be used in a wide range of audiological application as described above.

**Signal processing**

Gyroscopic measurements are defined as

$$ y^{gyr} = \omega + b^{gyr} + e^{gyr} $$

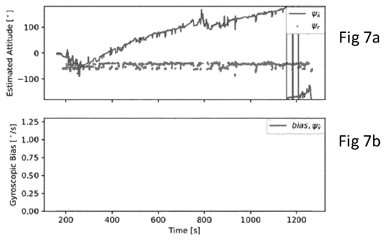

where $\omega$ is the angular velocity of the user head, $e^{gyr}$ the measurement noise and $b^{gyr}$ the gyroscopic bias. If the bias is not known and unaccounted for, the estimate of orientation will quickly deteriorate. An example of this is shown in Fig 7a-b.

Fig 7a shows estimated yaw angle (blue) and reference yaw angle (red). Fig 7b shows estimated bias in yaw direction. Estimation is performed with gyroscopic bias equal to zero.

Bias Measurement Model

When gaze direction is fix indicates that the head is stationary in the global coordinate if it is assumed that one does not follow a moving object with synced eye and head movements, which is highly unlikely. Such a measurement model would be expressed

$$ y^{bias} = b^{gyr} + e^{gyr} $$

where $b^{gyr}$ would be the gyroscope measurements when gaze direction is fixed and $e^{gyr}$ is the corresponding measurement noise. The important part here is that the angular velocity is zero at fixation and therefor the gyroscopic bias is measured which can then be used to correct the gyro measurements when the head is rotating.

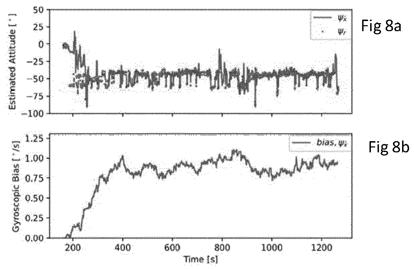

An example of the method with estimation results are shown in fig. 8a-b which is based on the same data as used in fig. 7a-b. Note that both figures are snapshots of Joakim and Alfred's thesis.

FIG. 8a shows estimated yaw angle (blue) and a reference yaw angle (red). Fig 8b shows estimated bias in yaw direction. Estimation is performed with an estimated gyroscopic bias.

**Counter head rotation model**

Assume the distance between the origin of the gaze vector and the origin of the body coordinate system, translation of the body coordinate system to be negligible. A model based on the vestibulo-ocular reflex could be used. The eye movements would be modelled to move in the opposite direction of the head. The angular velocity estimates of roll and pitch would be the input signals to such a system and the model would be

$$ \underbrace{\begin{bmatrix} \beta_{k+1} \\ \gamma_{k+1} \end{bmatrix}}_{x^{eye}_{k+1}} = \underbrace{\begin{bmatrix} \mathbf{I}^{2\times2} \end{bmatrix}}_{F^{eye}_k} \underbrace{\begin{bmatrix} \beta_k \\ \gamma_k \end{bmatrix}}_{x^{eye}_k} + Ts \underbrace{\begin{bmatrix} \mathbf{I}^{2\times2} \end{bmatrix}}_{G^{eye}_k} \underbrace{\begin{bmatrix} \omega^y_k \\ \omega^z_k \end{bmatrix}}_{u^{eye}} + \underbrace{\begin{bmatrix} \mathbf{I}^{2\times2} \end{bmatrix}}_{N^{eye}_k} \underbrace{\begin{bmatrix} w^{\beta} \\ w^{\gamma} \end{bmatrix}}_{w^{eye}} . $$

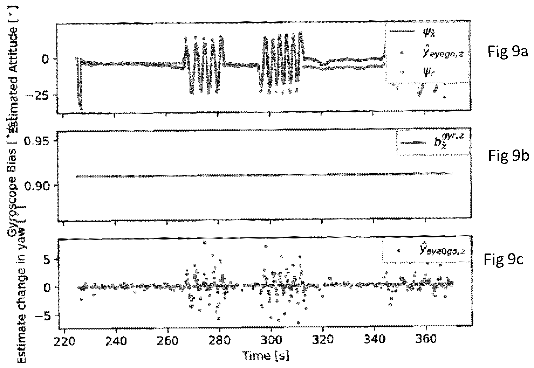

The angle between the gaze direction vector and the body xy-plane is denoted $\beta$ and the angle between the gaze vector and the body xz-plane is denoted $\gamma$. The input $u^{eye} = [\omega^y \ \omega^z]^T$ contains the angular velocity of the glasses about its y-and z-axes. The process noises affecting the gaze direction are denoted $w^{\beta}$ and $w^{\gamma}$. In fig 5a-c results using the VOR model is presented. FIG. 9a shows a comparison of IMU based compensated with VOR data in blue. Red is the reference data. Fig 9b shows bias estimate. Fig 9c shows Yaw estimate based on the VOR model.

The cocktail party problem introduced in 1953 describes the ability to focus auditoryattention in a noisy environment epitomized by a cocktail party. An individual with normal hearing uses several cues to unmask talkers of interest, such cues often lacks for people with hearing loss. This thesis explores the possibility to use a pair of glasses equipped with an inertial measurement unit (IMU), monocular camera and eye tacker to estimate an auditory scene and estimate the attention of the person wearing the glasses. Three main areas of interest have been investigated: estimating head orientation of the user; track faces in the scene; determine talker of interest using gaze. Implemented on a hearing aid, this solution could be used to artificially unmask talkers in a noisy environment.

The head orientation of the user has been estimated with an extended Kalman filter (EKF) algorithm, with a constant velocity model and different sets of measurements: accelerometer; gyroscope; monocular visual odometry (MVO); gaze estimated bias (GEB). An intrinsic property of IMU sensors is a drift in yaw. A method using eye data and gyroscope measurements to estimate gyroscope bias has been investigated and is called GEB. The MVO methods investigated use either optical flow to track features in succeeding frames or a key frame approach to match features over multiple frames. Using estimated head orientation and face detection software, faces have been tracked since they can be assumed as regions of interest in a cocktail party environment. A constant position EKF with a nearest neighbor approach has been used for tracking. Further, eye data retrieved from the glasses has been analyzed to investigate the relation between gaze direction and current talker during conversations.

Experiments have been carried out where a person wearing eye tracking glasses has listened to or been taking part in a discussion with three people. The different experiments excited the system in different ways. Results show that the solution performed well in estimating orientation during low angular rates but deteriorated during higher accelerations. During these experiments, the drift in yaw was reduced from 100o /min to approximately +/-20o /min using GEB and fully mitigated during small movements using key frames. The tracker performs well in most cases but during larger dynamics or when detections are to scarce, multiple tracks might occur due to errors in the orientation estimate. The results from the experiments show that tracked faces combined with gaze direction from the eye tracker can help in estimating the attention of the wearer of the glasses.

The cocktail party (CtP) effect, introduced by Cherry in 1953 [8] describes the ability to focus one's auditory attention in a noisy environment, such as a multitalker cocktail party. This is a complex issue and a wide research area. A healthy person uses a plethora of different cues to segment an auditory scene of multiple talkers. Spatial and spectral differences between talkers of interest and masking sound highly influences the intelligibility [6]. Visual stimulus of the face of a speaker also significantly improves hearing capability. This is particularly important under noisy conditions [61] such as in a CtP environment. The art of ventriloquism is a classic example of when visual stimulus heavily influences auditory perception [1].

According to the World Health Organization (WHO) approximately 466 million people suffer from hearing loss with a prognosis of 900 million in the year 2050 [38]. A common complaint among people seeking help due to deficient hearing is difficulty understanding speech. The difficulty often occurs in noisy conditions such as in a cafe or restaurant with multiple talkers. Since the former mentioned auditory cues to process a CtP environment are often lacking for people with hearing loss [35], a traditional hearing aid does not help with this problem in a satisfactory way resulting in people not using the hearing aid due to the amplified background noise. In [27] Kochin explains that one of the prevalent reasons for people not to wear a hearing aid is due to background noise being annoying or distracting.

The objective is to map an auditory scene. This is to be achieved using eye tracking glasses with a front camera to detect and track faces in the environment and identify whether the user is attending any of the faces. If so, which face the user is attending should be determined.

A pair of eye tracking glasses will be used to gather measurements.

With the objective in mind, three research questions are put forth, each with a couple of follow-up questions.

- What solution should be used to estimate glasses orientation?

    - What kind of dynamic model should be used and how well can it describe the system?
    - How well can measurement errors be mitigated?

- What solution should be used to detect and track faces?

    - Can multiple faces be tracked simultaneously?
    - What robustness can be achieved concerning data association and false detection?

- How should the gaze data be interpreted?

    - Can eye data be used to support yaw estimate?

- Can eye data be used to estimate a talker of interest?

For the orientation estimate, the goal is that the error in yaw should be minimized. Furthermore, the tracking software should enable tracking of at least three faces simultaneously in an indoor environment on distances that can be expected in a general conversation.

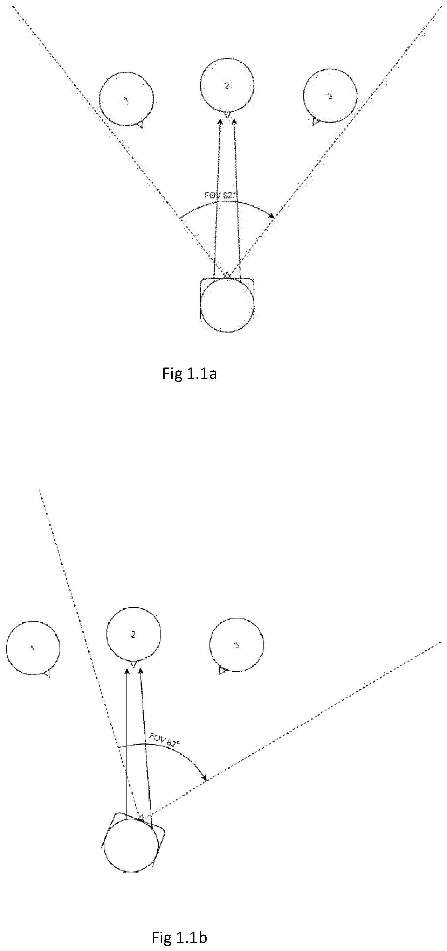

A possible scenario is depicted in Figure 1.1, the dotted lines indicate the camera field of view (FOV). To start with, Figure 1.1a, three faces are in the FOV and all are tracked using direct measurements. The momentary focus based on gaze direction is towards face 2. In a later moment, Figure 1.1b, the wearer of the glasses has turned their head and face 1 has gone out of view. In this case, camera measurements will be available for face 2 and 3 while only a priori knowledge and the head orientation is used to predict where face 1 is.

Fig 1.1a shows all faces inside camera FOV and measurements from face detection algorithm of all faces should be available, face 2 is gazed at.
Fig 1.1b shows the head of the user is turned, face 1 is tracked outside FOV and direction to face 2 and 3 are measured using face detection. Face 2 is gazed at.
Figure 1.1a-b shows an overview of a possible scenario, dotted lines indicate the FOV, which is 82° horizontally. Gaze vectors are illustrated with arrows.

The hardware available which will be used in this thesis are a pair of Tobii Pro 2 glasses, further referred to as the glasses. They are equipped with sensors for eye tracking, orientation estimation, a camera and a microphone. The wearer of the glasses are assumed to be stationary and is only allowed to rotate their head.

The translation of the glasses due to rotation is neglected as well as translational movement of faces in the scene. A direction of where to steer a beamformer will be estimated, but technical performance of the beamformer will not be considered.

On the topic monocular odometry, existing functions and algorithms available in OpenCV for Python will be used.

The CtP problem has been under extensive research since it was introduced.

Within the field of hearing aids a multitude of approaches aiming to solve the CtP problem exist, all with the intent of amplifying a target talker. One is to use directional microphones controlled by head direction [22], another to manually input the direction via a remote, either by pointing in the desired direction or button input [22].

A third approach tested in [22] and [13] is to use eye gaze direction to estimate a desired direction.

Eye gaze direction results are promising with faster response time, better recounts of conversations and easier to use compared to the alternative methods [22]. In [36], two ways to use gaze data for sound source selection are analyzed, a "hard steering" which means that the talker, which is looked upon at every specific moment, is amplified, while the amplification of other talkers is reduced and a "soft steering" which, with a

Bayesian approach explained in [24] can amplify several sources depending on the latest couple of seconds of gaze data. Results from [36] point towards that hard steering is preferred. However, more experiments in more varied situations might be needed to get better knowledge of when each kind of steering would be to prefer.

Conversation dynamics are intrinsically fast [46] and a steered hearing aid must be able to, in real time, follow the dynamics and amplify a talker of interest.

Consequently, a natural extension to gaze steering is to predict listener focus using more information than just the gaze data. For the CtP problem, talkers are assumed to be of interest and thus face detection and tracking can be used.

Object detection is an extensively research subject for which face detection is a subgroup. Some of the most popular detection algorithms are based on *convolutional neural networks* (CNN) such as R-CNN [17], Fast R-CNN [16] and Faster R-CNN [45], versions of *you only look once* (yolo) [42-44] and *MobileFaceNets* (MFN) [7]. MFN is developed as a real time face detector for mobile use [7] whilst the other mentioned methods are general object detectors that can be trained to detect faces.

To be able to steer efficiently, the direction to sound sources out of sight can be tracked. In a general setting, this requires that the pose of the glasses is estimated but due to the limitation of no translational movement, only rotation is of interest for this thesis. Still, prior work in full pose estimation can still be used. Since both visual and inertial measurements are available, they can be fused to improve pose estimation compared to using only visual or inertial measurements. Multiple solutions to fuse these kinds of measurements exist, in [11] six visual-inertial algorithms are evaluated in how well they can estimate the pose of a flying robot.

Three of the algorithms are based on Kalman filters and three of them are optimization based. Results in [11] show that tightly coupled solutions perform best with the cost of a higher computational burden. A loosely coupled Kalman filter approach was most efficient in terms of low computational power, but had the lowest accuracy among the evaluated algorithms. In [60], combination of visual and inertial measurements from sensors worn by a human to track their motion is performed. In the mentioned study, movements are classified as combined translation and rotation or only rotation.

## Orientation Representation

One way to represent orientation is the unit quaternion. The quaternion representation was first introduced in [52]. In [30], orientation is described using the quaternion vector $q = [q0; q1; q2; q3]^T$, where $q0$ is scalar and $q1; q2; q3$ are complex with one imaginary axis each. One strength of this representation compared to the commonly used Euler representation is that it is not affected by gimbal lock which is a phenomenon were a degree of freedom is lost.

In [51], the time derivative of orientation expressed in unit quaternion given the angular velocity $w = [wx; wy; wz]^T$ is given by

$$\dot{q} = \frac{1}{2}S(\omega)q = \frac{1}{2}\bar{S}(q)\omega, \qquad (2.1)$$

where

$$S(\omega) = \begin{bmatrix} 0 & -\omega_x & -\omega_y & -\omega_z \\ \omega_x & 0 & \omega_z & -\omega_y \\ \omega_y & -\omega_z & 0 & \omega_x \\ \omega_z & \omega_y & -\omega_x & 0 \end{bmatrix}, \qquad (2.2)$$

The rotation matrix expressed in $q$ is

$$R(q) = \begin{bmatrix} q_0^2 + q_1^2 - q_2^2 - q_3^2 & 2(q_1 q_2 + q_0 q_3) & 2(q_1 q_3 - q_0 q_2) \\ 2(q_1 q_2 - q_0 q_3) & q_0^2 - q_1^2 + q_2^2 - q_3^2 & 2(q_2 q_3 - q_0 q_1) \\ 2(q_1 q_3 - q_0 q_2) & 2(q_2 q_3 + q_0 q_1) & q_0^2 - q_1^2 - q_2^2 + q_3^2 \end{bmatrix}. \qquad (2.4)$$

Let $s = q_0$ and $v = [q_1, q_2, q_3]$, then an orientation in unit quaternion $[s_1, v_1]$ can be rotated by a rotation expresed in unit quaternion $[s_2, v_2]$ with

$$q = \begin{bmatrix} s_1 s_2 - v_1 \cdot v_2, & s_1 v_2 + s_2 v_1 + v_1 \times v_2 \end{bmatrix}. \qquad (2.5)$$

A downside using unit quaternion instead of Euler angles for orientation is that it is not as intuitive. Thus, within this thesis, the orientation will be visualized using Euler angles where roll, pitch and yaw, annotated with
$\phi$, $\theta$ and $\psi$,
are positive rotation around the $x$-, $y$- and z-axis respectively.

## Inertial Measurement Unit

An inertial measurement unit (IMU) is a set of sensors comprising at least an accelerometer and/or at least one gyroscope. The accelerometer is used to measure proper acceleration, the gyroscope measures angular velocity and the magnetometer measures the magnetic field. The IMU is often complemented with a magnetometer which allows estimation of a full 3D orientation. To estimate orientation of the IMU
relative to an earth reference frame, two linearly independent vectors, mutual in earth and IMU coordinate systems have to be identified. Using the accelerometer,
the gravity vector can be identified and using the magnetometer, the magnetic field of earth can be identified. Knowing these two vectors, the orientation of the IMU relative to earth can be derived [15]. The IMU can be connected to the hearing aid's noise reduction system. An advantage of using accelerometer input(s) to the noise reduction system is that if the user is moving (e.g. walking, running etc.), the settings of the noise reduction system can be adapted accordingly. For example, a single sound source can be selected based on the accelerometer or IMU input in the hearing aid system.

The IMU measurements contain errors which, for simplicity, can be split into two parts, one independent white noise part and one bias part [57]. For the accelerometer, the bias is assumed to be constant and would lead to an offset in the orientation estimate. The gyroscope bias is assumed to vary and since the angular velocity from the gyroscope is integrated to estimate orientation, the gyroscope bias leads to a drift in orientation. This drift can be compensated for with the absolute orientation estimates retrievable using accelerometer and magnetometer
[34]. If using an IMU only, some drift in yaw will occur if no additional measurements can be used.

**Extended Kalman Filter**

The Kalman filter (KF), introduced 1960 in [26], is used to optimally estimate states in a linear model by minimizing the estimation error. Real processes are seldom linear, therefore some modifications to the original KF is needed. A nonlinear state-space model for a system without input signals and additive noise can be described by

$$x_{k+1} = f(x_k) + N_k w_k, \qquad (2.6a)$$

$$y_k = h(x_k) + e_k, \qquad (2.6b)$$

where $f$ is the dynamic model and $h$ relates the states to the measurements. N is a linear matrix relating the process noises and states. Time is indicated with subscript $k$ and the states, $xk$, are quantities to be estimated. Measurements are denoted $yk$, $wk$ are process noises and $ek$ are measurement noises. The noises are assumed to be Gaussian, i.e, $wk\_N(0; Q)$ and $ek\_N(0; R)$ for a KF. In 1962, Smith et al [53] introduced the extended Kalman filter (EKF) for nonlinear models. An EKF implementation requires a linearization of the nonlinear model for each instance of time.

The EKF algorithm consists of a prediction and a measurement update. The prediction step is

$$\hat{x}_{k+1|k} = f(\hat{x}_{k|k}), \qquad (2.7a)$$

$$P_{k+1|k} = F_k P_{k|k} F_k^T + N_k Q N_k^T, \qquad (2.7b)$$

where f g indicates that the value is estimated. $Pk+1jk$ and $Pkjk$ are covariances of the prediction and estimate, respectively. Subscript $k1jk0$ indicates that the value in time $k1$ is evaluated based on values in time $k0$.

The measurement update step is performed by

$$S_{k+1} = H_{k+1} P_{k+1|k} H_{k+1}^T + R, \qquad (2.8a)$$

$$K_{k+1} = P_{k+1|k} H_{k+1}^T S_{k+1}^{-1}, \qquad (2.8b)$$

$$\bar{y}_{k+1} = y_{k+1} - h(\hat{x}_{k+1|k}), \qquad (2.8c)$$

$$\hat{x}_{k+1|k+1} = \hat{x}_{k+1|k} + K_{k+1} \bar{y}_{k+1}, \qquad (2.8d)$$

$$P_{k+1|k+1} = (I - K_{k+1} H_{k+1}) P_{k+1|k}, \qquad (2.8e)$$

where R is the measurement covariance matrix, $yk$ is the vector containing measured signals and

$$F_k = \frac{\partial f}{\partial x}\Big|_{\hat{x}_{k|k}, u_{k+1}}, \qquad (2.9a)$$

$$H_{k+1} = \frac{\partial h}{\partial x}\Big|_{\hat{x}_{k+1|k}}. \qquad (2.9b)$$

**Monocular Visual Odometry**

Monocular visual odometry (MVO) is a collective term for methods to estimate translation and rotation using measurements from a monocular camera. Intrinsic parameters of the camera, achieved through calibration, and image correspondences are used to estimate the translation vector $t = [tx; ty\ tz]T$ and rotational matrix R between frames. The translation can only be extracted up to an unknown scale through monocular odometry [23]. Calibrated cameras are primarily used to reduce the complexity of the problem. Seven point correspondences are needed to obtain a relative pose from two uncalibrated images, leading to up to three solutions. Stated by Kruppa in [29] (translated from German to English in [14]), the use of camera intrinsic parameters introduces two constraints reducing the number of points needed to five. Kruppa [29] also proved that up to eleven different solutions can be obtained from the five point problem which was later reduced to ten [37]. The primary steps in estimating the orientation between two frames are shown below and theory for each step will be presented later in the section.

1. Detect features in first frame.
2. Find matching features in the subsequent frame.
3. Estimate the essential matrix using the matched features.
4. Decompose the essential matrix.

The steps are similar to those mentioned in [50] but simplified since the only rotation is of interest.

**Feature Detectors**

In the scope of this thesis, a feature is defined as a local pattern distinguishable from its immediate neighbors. Image properties often used to extract features are texture, color and intensity [56]. There exists a multitude of different feature detectors. Some of the more popular detection algorithms, included in Open source computer vision (OpenCV), are

- Harris Corner Detector introduced in [21].
- Shi-Tomasi Corner Detector introduced in [25].
- Scale-Invariant Feature Transform (sift) introduced in [32].
- Speeded-Up Robust Features (surf) introduced in [4].
- Features from Accelerated Segment Test (fast) introduced in [47].
- Oriented fast and Rotated brief (orb) introduced in [48].

Since features are to be compared between frames, the ability to repeatably detect the same features are one of the most important properties of a feature detector.
One parameter influencing the repeatability is the feature invariance [56].
Within mathematics, an invariant is a property unchanged when a specific transformation or operation is performed, the opposite is called covariant. For features, this is important to know if the feature will be detectable after a change in pose. Typical transformations that occur between frames, in a static environment, are rotational and translational leading to scale and perspective changes in the image. A rotation of a 2D surface does not make it any smaller or bigger, thus, feature detectors can be assumed rotational invariant. To the contrary, if translational transformation is applied a 2D surface is scaled, thus all features are scale covariant. A scale invariant detector provides scale invariance by normalizing the features with a description. A scale invariant detector is more generic compared to a detector which is only rotational invariant. Therefore, scale invariant detectors should be used where large movements might occur but rotational invariant detectors might be enough for applications with smaller movements [56]. From the mentioned detectors, sift, surf and orb have a descriptor that normalizes the features, thus, making them scale invariant [48, 56]. The detectors, Harris, Shi-Tomasi and fast does not have any descriptor [21, 25, 47], thus making them invariant to only rotation.
After features have been extracted in the first frame the corresponding features should be found in subsequent frames. This can be done either by tracking or matching features. Feature matching uses the descriptions of features in two frames to extract matches between the features, thus feature matching needs descriptions of the features in each frame, implying that non-descriptor-based detectors cannot be used directly without an external descriptor. The computation of a feature descriptor can be computationally expensive [9].

**Optical Flow**

Another method for finding the primary features in the subsequent frame is to track the features. Unlike when using a feature matching approach, as described in Section 2.4.1, for which features needs to be detected and described at each frame. Tracking of features only require detection when the number of tracked features are below a certain threshold. This occurs when too many features get out of frame or are obscured. One method of visual tracking of features is to use optical flow which is defined as the pattern of apparent motion. The underlying assumption for use of optical flow is that the pixel intensities do not change between consecutive frames [33].

The problem formulation for optical flow is as follows. *I (x; y; t)* is an arbitrary pixel in an image at time *t.I (x; y; t)* moves a distance of (*dx; dy*) in the next frame in time *t+dt* [33]. Under the assumption of constant intensity, the following holds

$$I(x, y, t) = I(x + dx, y + dy, t + dt). \qquad (2.10)$$

A Taylor series expansion of the right side of (2.10) results in

$$I(x + dx, y + dy, t + dt) \approx I(x, y, t) + \frac{\partial I}{\partial x}dx + \frac{\partial I}{\partial v}dy + \frac{\partial I}{\partial t}dt. \qquad (2.11)$$

Insertion of (2.11) in (2.10)

$$\frac{\partial I}{\partial x}dx + \frac{\partial I}{\partial y}dy + \frac{\partial I}{\partial t}dt \approx 0, \qquad (2.12)$$

which can be written as

$$\frac{\partial I}{\partial x}\frac{dx}{dt} + \frac{\partial I}{\partial y}\frac{dy}{dt} + \frac{\partial I}{\partial t} \approx 0. \qquad (2.13)$$

Redefining (2.13) as

$$I_x u + I_y v + I_t \approx 0,$$

where

$$I_x = \frac{\partial I}{\partial x}, \; I_y = \frac{\partial I}{\partial y}, \; I_t = \frac{\partial I}{\partial t},$$

the (*x, y*) components of optical flow defined as

$$u = \frac{dx}{dt}, \; v = \frac{dy}{dt}.$$

One equation and two unknowns, (u; v) are obtained which gives an undetermined system. There exists a multitude of methods to solve this problem, one provided by Bruce D. Lucas and Takeo Kanade introduced in [33] assumes an equal flow of the pixels within an *m_m* window, where each pixel is numbered. The assumption of an equal flow limits the method to be used where movements between frames are small. The resulting system of equations is

$$\underbrace{\begin{bmatrix} I_{x1} & I_{y1} \\ I_{x2} & I_{y2} \\ \vdots \\ I_{xN} & I_{yN} \end{bmatrix}}_{A} \underbrace{\begin{bmatrix} u \\ v \end{bmatrix}}_{x} + \underbrace{\begin{bmatrix} I_{t1} \\ I_{t2} \\ \vdots \\ I_{tN} \end{bmatrix}}_{b} = 0, \qquad (2.14)$$

for pixel $I_n$, $n \in [1, 2...N]$, $N = m \times m$, within the window. The result of the assumption of neighbouring pixels is an overdetermined system that can be solved using a least squares approach

$$\mathbf{x} = (A^T A)^{-1} A^T (-b) \qquad\qquad (2.15)$$

for the searched window. Thus, (2.15) is a solution for solving the optical flow problem given the image derivatives in *x, y* and *t* [5]. Using the Lucas-Kanade (LK) method for optical flow, a feature can be tracked in subsequent frames given two images and feature points of the first frame.

**Essential Matrix**

A natural interpretation of a feature could be a point $P = [X;\ Y;\ Z]^T$ in 3D space projected on an image as $p = [u;\ v]$ and the essential matrix relates 3D points projected on two images using epipolar geometry [23]. The essential matrix is expressed

$$E = [t]xR;$$

where R is the orientation of the camera and [*t*]x is the skew-symmetric matrix. The skew-symmetric matrix is defined as

$$[t]_x = \begin{bmatrix} 0 & -t_z & t_y \\ t_z & 0 & -t_x \\ -t_y & 0 & t_x \end{bmatrix},$$

and is a result of a property of the cross product between two vectors. An example with vectors $a = [ax\ ay\ az]^T$ and $b = [bx\ by\ bz]^T$ is

$$a \times b = \begin{bmatrix} 0 & -a_z & a_y \\ a_z & 0 & -a_x \\ -a_y & 0 & a_x \end{bmatrix} \begin{bmatrix} b_x \\ b_y \\ b_z \end{bmatrix} = [a]_x b.$$

Below is a derivation and explanation of the essential matrix.

Use extended vectors $\bar{p} = [p\ 1]^T$ and $\bar{P} = [P\ 1]^T$, commonly known as homogeneous coordinates, to express a 3D point projection as

$$\lambda \bar{p} = \mathcal{K}[R|t]\bar{P}, \qquad\qquad (2.16)$$

where *K* is the pinhole camera intrinsic matrix defined using the focal lengths $(f_x, f_y)$ and the optic center $(c_x, c_y)$ as

$$\mathcal{K} = \begin{bmatrix} f_x & 0 & c_x \\ 0 & f_y & c_y \\ 0 & 0 & 1 \end{bmatrix}.$$

Furthermore, $t = [t_x, t_y, t_z]^T$ is the translation vector up to an unknown scale and $\lambda$ is a scale factor. Additionally, $M = \mathcal{K}[R|t]$ is called the camera projection matrix [23] where [*R*|*t*] is the column stacked $3 \times 4$ matrix of R and *t* as

$$[R|t] = \begin{bmatrix} R_{11} & R_{12} & R_{13} & t_x \\ R_{21} & R_{22} & R_{23} & t_y \\ R_{31} & R_{32} & R_{33} & t_z \end{bmatrix}.$$

With known camera intrinsic matrix, the projection in (2.16) can be expressed in normalized camera coordinates by multiplication of $\mathcal{K}^{-1}$ from the left, resulting in

$$\bar{p} = [R|t]\bar{P}, \text{ where } \bar{p} = \lambda \mathcal{K}^{-1}\bar{p} \qquad (2.17)$$

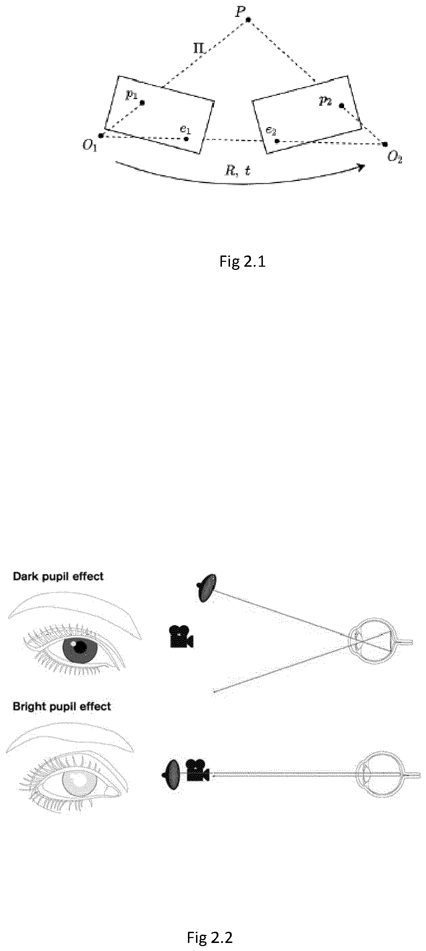

with a normalized projection matrix $\tilde{M} = [R|t]$. Given a point correspondence in two images, the epipolar geometry can be expressed, visualized in Figure 2.1. The plane_spanned by the two camera centers ($O1$; $O2$) and point P is called the epipolar plane. The line defined by ($O1$; $O2$) is called the baseline and the points ($e1$; $e2$) where the baseline and the image planes intersect are called the epipoles [23].

Figure 2.1: The plane spanned by the two camera centers ($O1$; $O2$) and the 3D point $P$ is called the epipolar plane, _. The line through $O1$ and $O2$ is the baseline. The epipoles ($e1$; $e2$) defined by the intersection of the baseline for respective image and the projected points ($p1$; $p2$) all lie on the epipolar plane. Thus, the lines on the image planes through $px$ and $ex$ also lie in the epipolar plane and are called epipolar lines.

Let $\bar{M}_1 = [I|0]$ and $\bar{M}_2 = [R|t]$ be normalised projection matrices for subsequent frames and

$$\bar{p}_1 = \bar{M}_1 P, \quad \bar{p}_2 = \bar{M}_2 P.$$

$\bar{p}_2$ expressed in the first camera coordinate system, i.e the global coordinate system, can be written as

$$\bar{p}_2^g = R^T \bar{p}_2 - R^T t.$$

$\bar{p}_2^g$ and $\overline{O_1 O_2} = R^T t$ both lies in $\Pi$, thus

$$R^T t \times (R^T \bar{p}_2 - R^T t) \perp \Pi$$

$$R^T(t \times \bar{p}_2) \perp \Pi \quad \text{and} \quad \bar{p}_1 \in \Pi \Rightarrow$$
$$(R^T(t \times \bar{p}_2))^T \bar{p}_1 = 0 \Leftrightarrow (t \times \bar{p}_2)^T R \bar{p}_1 = 0$$

which can be written as

$$\bar{p}_2^T [t]_x R \bar{p}_1 = \bar{p}_2^T E \bar{p}_1 = 0 \qquad (2.18)$$

which is called the epipolar constraint equation where $[t]xR$ is the sought essential matrix. To estimate the essential matrix, the five point problem mentioned in Section 2.4 needs to be solved. In [37], Nistér introduced an efficient way of solving the five point problem using using a RANdom SAmple Consensus (RANSAC) scheme [12].

In the ransac scheme, multiple five point samples of tracked points are randomly extracted and each sample yields a set of hypothetical orientation estimates. Each hypothesis is then statistically tested and scored over all matched points and the best scoring hypothesis is further improved by iterative refinement.

**Pose Estimation**

From an essential matrix four different compositions of rotational matrices can be extracted [23]. Assuming $\tilde{M}1 = [I|0]$ is the first camera matrix and $\tilde{M}2$ the second camera matrix the translation and rotation to the second frame be expressed as one of the following

$$\bar{M}_2 = \{[R|t], [R|-t], [R_b|t], [R_b|-t]\}.$$

Where $\bar{M}_2 = [R|t]$ is the true rotation and translation. $\bar{M} = [R|-t]$ has a reversed translation vector compared to the true, $\bar{M} = [R_b|t]$ and $\bar{M} = [R_b|-t]$ is called the "twisted pair" solutions for $\bar{M} = [R|t]$ and $\bar{M} = [R]-t$ respectively. The twisted pair solutions have a 180° rotation about the line joining the two camera centers [23].

**Eye Movements and Gaze Tracking**

In this section, theory behind eye movements and gaze tracking is explained. Eye movement theory is presented to get an understanding of how eyes move. A short background to gaze tracking is included to give an overview of how it can be performed.

**Eye Movements**

Movements of the eye can generally be divided into four different types. Saccades, smooth pursuit movement, vergence movement and Vestibulo-ocular movement [10]. Saccades being rapid, balistic movement of the gaze between points. Both voluntary and non-voluntary. Both the velocity and time of a saccade is highly dependent on the distance covered, a 2° saccade, typical for reading, lasts for about 30 ms whereas a 5° saccade, typical for scene perception, last about 30-40 ms [39]. Smooth pursuit movements are voluntary movements to fixate on and follow objects. Vergence movement is the fixation of both eyes based on distance, i.e, the disjunctive movement to fixate objects closer or further away from the observer. The vestibulo-ocular movements are a reflex to stabilize the eyes due to head movements [31]. The effect results in eye movement in the opposite direction of head movement. Fixation to a point is the most common state for eyes and thus, knowledge of when one fixates is important for accurate classification of eye movements.
To determine which kind of eye movement an individual is performing there are several solutions available. A commonly used method is velocity threshold identification (I-VT) [49]. In [28], several methods to determine eye movement based on gaze data are evaluated and it is concluded that I-VT is performing well in terms of saccade identification. The threshold used significantly affects the performance of the classification and can be varied depending on hardware and situation.
A threshold somewhere between 30°/s and 70°/s performs well in terms of identifying saccades in [28].

**Gaze Tracking**

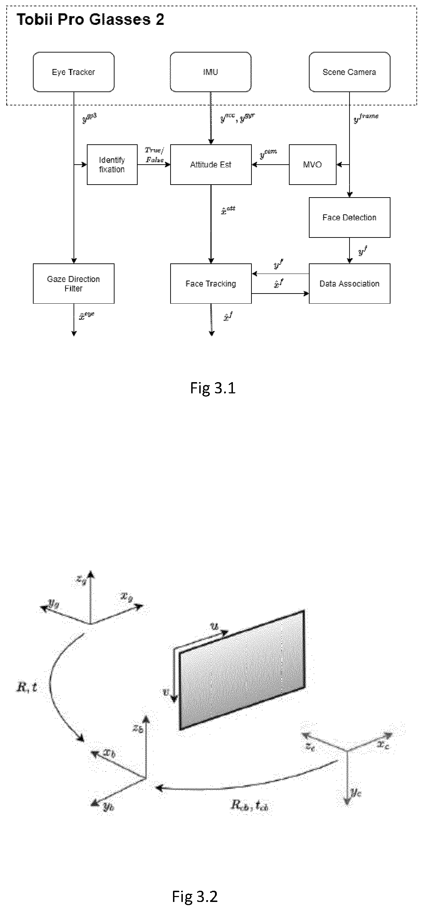

To measure eye movements in wearable eye trackers, video-oculography (VOG) is often used. In most VOG applications, infrared light is used to provide contrast between the pupil and the rest of the eye and enable tracking in most light conditions [18]. There are two main methods for eye tracking using infrared light, dark pupil and bright pupil tracking. For dark pupil tracking, the camera and light source is offset in angle leading to that none of the light passing through the pupil is reflected back to the camera. With bright pupil tracking, the infrared light source is placed coaxial with the camera causing much of the light passing through the pupil to be reflected into the camera [20]. Both methods aim to measure the position of the pupil which is further used to estimate gaze direction.
Figure 2.2 depicts the two methods. Figure 2.2: Explanation of bright and dark pupil tracking. Image rights: Tobii Pro AB.
When the position of the pupil is known, parameters which differ between individuals are needed to estimate gaze direction. These are often obtained through a calibration procedure where the user focuses their gaze to at least one point [58].
The system to be implemented can briefly be described by Figure 3.1. The hardware at hand is, as mentioned earlier, a pair of Tobii Pro 2 glasses. The input signals to the system are measurements from eye tracker and IMU and frames from the scene camera. The outputs are estimated gaze direction and estimated direction to surrounding faces. The purpose of the system is to provide data which can be used to determine where a user directs their attention. To predict attention, face tracking is to be performed. To enable efficient tracking when faces cannot be detected using the camera, an orientation estimate is needed. Combining IMU supported face and gaze tracking, estimates of a users attention can be evaluated.
Figure 3.1: System overview with measurement signals consisting of gaze data, IMU data and frames from the scene camera. The outputs are gaze direction and direction to tracked faces.

**Coordinate Systems**

Representing the system, several coordinate systems are used to represent different entities of the system. Figure 3.2 visualizes the coordinate systems. Which coordinate system a vector or matrix is expressed in is indicated with subscript where needed to clarify.
Figure 3.2: Visualization of global, body, camera and image coordinate system.
The transformation between global to body is defined by the rotational matrix $R$ and the translation vector $t$. The relationship between the camera and the body is defined by the constant rotational matrix $Rcb$ and translation vector $tcb$.

- Camera: Depicted by (*xc; yc; zc*) in Figure 3.2 with origin in the center of the camera, right handed system with z-axis in the camera direction and *y*-axis in the downward direction. It will be called the c-frame.

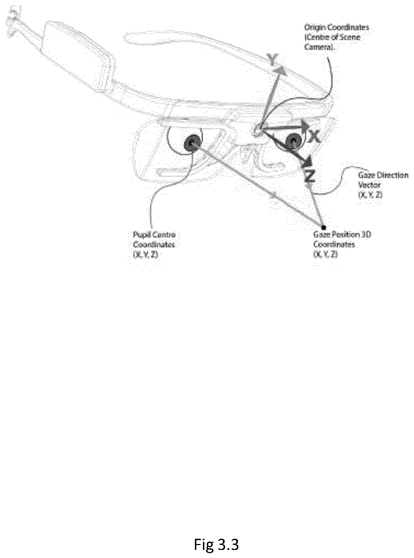

- Gaze and IMU: The gaze and IMU coordinate system has its origin in the center of the c-frame. The coordinate axes are defined as in Figure 3.3 and will henceforth be called IMU-frame.

- Image: The image coordinate system is defined with origin in the top left corner of a frame with *u*-axis to the right and v-axis downwards as depicted in Figure 3.2.

- Body: The body coordinate system, represented by (*xb; yb; zb*) in Figure 3.2 is defined as the right hand system with origin in the center of the camera, *tcb* = ⁻0. The x-axis is directed as the z-axis of the IMU-frame and the body z-axis is directed upwards. Hereafter it will be called the *b*-frame.

- Global: An earth fix right hand global coordinate system with the z-axis parallel to gravity in opposite direction. The x-axis is initialised parallel to the projection of the body frame x-axis onto the plane perpendicular to the global z-axis. In Figure 3.2 it is represented by (*xg ; yg ; zg*). Henceforth, it will be called the g-frame.

Figure 3.3: The coordinate system used by the Tobii Pro Glasses 2 [55]. Image rights: Tobii Pro AB.

The origin of the c-frame and IMU-frame coincide with the *b*-frame, thus, $tcb = [0; 0; 0]\,T$ in Figure 3.2. Coordinates in the c-frame can be expressed in the *b*-frame through

$$R_{cb} = \begin{bmatrix} 0 & 0 & 1 \\ -1 & 0 & 0 \\ 0 & -1 & 0 \end{bmatrix}$$

and the gaze and IMU data is rotated to the *b*-frame using the rotational matrix

$$R_{\mathrm{IMU}} = \begin{bmatrix} 0 & 0 & 1 \\ 1 & 0 & 0 \\ 0 & 1 & 0 \end{bmatrix}.$$

The relationship between the g-frame and the *b*-frame is defined by the rotational matrix *R* and the translation vector *t*. Since the offset between *b*-frame and *g*-frame is neglected, the origin of the two coordinate systems is assumed to coincide, thus $t = [0; 0; 0]T$.

**Computer vision**

A solution based on MVO processes the visual information from the camera to retrieve orientation measurements and pixel coordinates for faces.

**Odometry**

The pipeline for obtaining the rotational matrix uses the OpenCV API and follows the general steps described in Section 2.4. The "true" and the twisted pair rotational matrices are retrieved as described in Section 2.4.4 but the hypothesis testing performed is described in Section 3.3.1. Two different methods were considered for estimating rotation using the camera.

1. Use LK optical flow for tracking features between consecutive frames.
2. Iteratively match descriptors in each frame with a key frame until the number of matches to the key frame is smaller than a certain threshold, whereas the most recent frame is used as key frame. In the new key frame, new features have to be found and described.

The primary reason for using LK optical flow is the computational cost. The optical flow approach does not need a descriptor-based detector, moreover, small translation movement can be assumed since the features are tracked for subsequent frames, reducing the need for scale invariant features. Due to the computational cost of describing features only the three rotational invariant detectors mentioned in Section 2.4.1 are considered with the optical flow method. According to [2], the fast detector is sensitive to noise and is therefore excluded. For the two remaining detectors, Harris and Shi-Tomasi, [3] describes the Shi-Tomasi detector as a modified and improved Harris detector, therefore, the Shi-Tomasi detector is used. The algorithm used for pose estimation using optical flow is described as pseudo code in Algorithm 1.

---

**Algorithm 1:** Pose estimation using optical flow

---

**Result:** $R_1$, $R_2$
Retrieve frame;
Detect features;
**while** *Got Video* **do**
    Retrieve new frame;
    Track features from previous frame to new frame;
    **if** *# Tracked features>$\epsilon$* **then**
        Estimate Essential Matrix;
        Retrieve $R_1$ and $R_2$;
        previous frame = new frame;
        features = tracked features;
    **else**
        Detect new Features;
    **end**
**end**

---

The second method implemented requires a descriptor-based detector. This reduces the number of choices to three, sift, surf and orb. From these, both sift and surf are patented and not included in the specific OpenCV package used, therefore, they are not considered any further. Algorithm 2 describes the key frame based method in pseudo code.

---

**Algorithm 2:** Pose estimation using feature matching with key frame

---

**Result:** $R_1$, $R_2$
Retrieve frame as key frame;
Detect and describe features;
**while** *Got Video* **do**
    Retrieve new frame;
    Detect and describe features;
    Match features;
    **if** *# Matched features>$\epsilon$* **then**
        Estimate Essential Matrix;
        Retrieve $R_1$ and $R_2$;
    **else**
        Set new frame as key frame;
        Detect and describe New features;
    **end**
**end**

---

Compared to the optical flow approach, this will be much more computationally expensive. Primarily due to the fact that features need to be detected at each frame and those features require a description. One advantage of using a description based approach is that it is more robust in terms of that larger movements can be handled and thus a lower sampling rate than when using optical flow can be used. Thus, a combination of them might be preferred. Combining both is investigated in [9], but due to time constraints it is not investigated in this thesis.

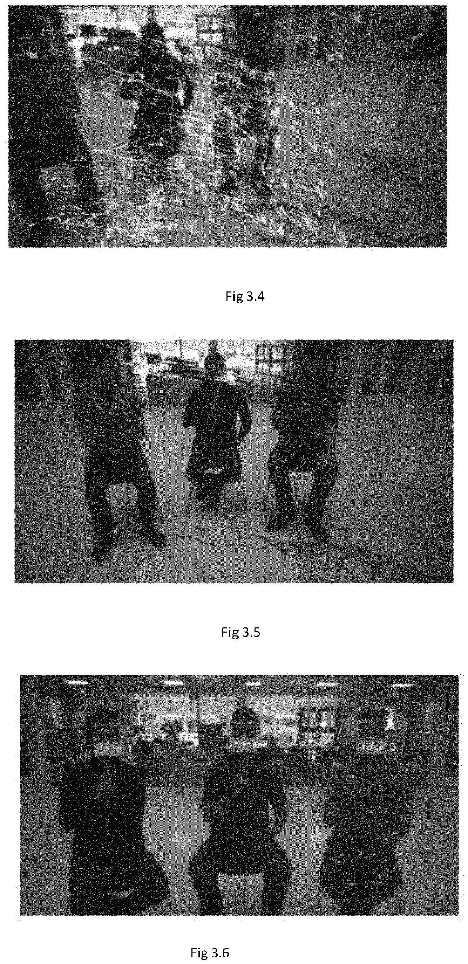

Feature detection using Shi-Tomasi corner detection and tracking features using lk optical flow is visualized in Figure 3.4. Each line in the figure corresponds to a tracked feature and the different colours indicate how the feature moved between two consecutive frames. Rotation is made in negative yaw direction.

Figure 3.4: Visualisation of tracking features using optical flow over multiple frames. The long straight lines in the figure indicate poor results from the optical flow method since they do not relate well to the estimated movement of most other tracked features.

Feature detection and description using orb and matching the descriptors for each frame with a key frame which is visualized with one frame as an example in Figure 3.5 where rotation is made in negative yaw direction.

Figure 3.5: One frame visualizing matching of features using key frames.

**Face Detection**

This thesis is not a survey of different face detectors, thus, not much focus has been in finding the optimal face detector for the task but several detectors have been considered, mainly those described in Section 1.5. The main parameters considered when choosing face detector was speed and accuracy. In [59] several face detectors were tested for speed and accuracy. Two of the detectors in the test were the MFN and a version of the YOLO detector. MFN was faster by a factor of 10 compared to YOLO but had lower accuracy. Even though it had lower accuracy than the YOLO detector, MFN was picked due to the significant speed difference. The output from the MFN detector is a bounding box. In this thesis, the center pixel coordinates ($u; v$) of the bounding box is set as a measurement of the position of face. An example frame where three faces are detected is shown in Figure 3.6. Red rectangles indicate bounding boxes and the cyan circles indicating the center of a bounding box.

Figure 3.6: An example frame of three successful face detections with center of box indicated by the cyan colored circles.

**Estimation**

To filter measurements, two EKF's are implemented to estimate orientation and gaze direction. Their measurements are signals from the eye tracker and IMU and estimated rotation from the computer vision module. The outputs are estimates of orientation and angular velocity of the glasses and the direction and angular velocity of the gaze. Everywhere quaternions are modified, e.g., in the measurement update, they are normalized to represent proper orientation.

**Orientation Model**

To estimate the orientation of the glasses, a nearly constant angular velocity model is used. The use of a constant angular velocity model is also used in [54] where wearable sensors are used to estimate pose. The model is extended with a constant gyroscope bias model,

$$\underbrace{\begin{bmatrix} q_{k+1} \\ \omega_{k+1} \\ b_{k+1}^{gyr} \end{bmatrix}}_{x_{k+1}^{att}} = \underbrace{\begin{bmatrix} \mathbf{I}^{4\times4} & \frac{T_s}{2}\bar{S}(q_k) & 0^{4\times3} \\ 0^{3\times4} & \mathbf{I}^{3\times3} & 0^{3\times3} \\ 0^{3\times4} & 0^{3\times3} & \mathbf{I}^{3\times3} \end{bmatrix}}_{F_k^{att}} \underbrace{\begin{bmatrix} q_k \\ \omega_k \\ b_k^{gyr} \end{bmatrix}}_{x_k^{att}} + \underbrace{\begin{bmatrix} 0^{4\times3} & 0^{4\times3} \\ \frac{T_s}{2}\mathbf{I}^{3\times3} & 0^{3\times3} \\ 0^{3\times3} & \mathbf{I}^{3\times3} \end{bmatrix}}_{N_k^{att}} \underbrace{\begin{bmatrix} w_k^{\omega} \\ w_k^{bias} \end{bmatrix}}_{w_k^{att}}. \qquad (3.1)$$

In (3.1), the state vector consists of the unit quaternion $q_k = [q_0 \ q_1 \ q_2 \ q_3]^T$ representing the orientation of the $b$-frame relative the $g$-frame, the angular velocity $\omega_k = [\omega_x \ \omega_y \ \omega_z]^T$, in radians per second of the $b$-frame and the gyroscope bias $b_k^{gyr} = [b^{gyr_x} \ b^{gyr_y} \ b^{gyr_z}]^T$ in radians per second. The matrix $\bar{S}(q)$ is defined in Section 2.1. The process noises $w_k^{\omega} = [w^{\omega_x} \ w^{\omega_y} \ w^{\omega_z}]^T$ and $w_k^{bias} = [w^{bias_x} \ w^{bias_y} \ w^{bias_z}]^T$ in angular velocity and gyroscope bias are distributed, $w_k^{\omega} \sim N(0, Q^{\omega})$ and $w_k^{bias} \sim N(0, Q^{bias})$.

**Inertial Measurement Models**

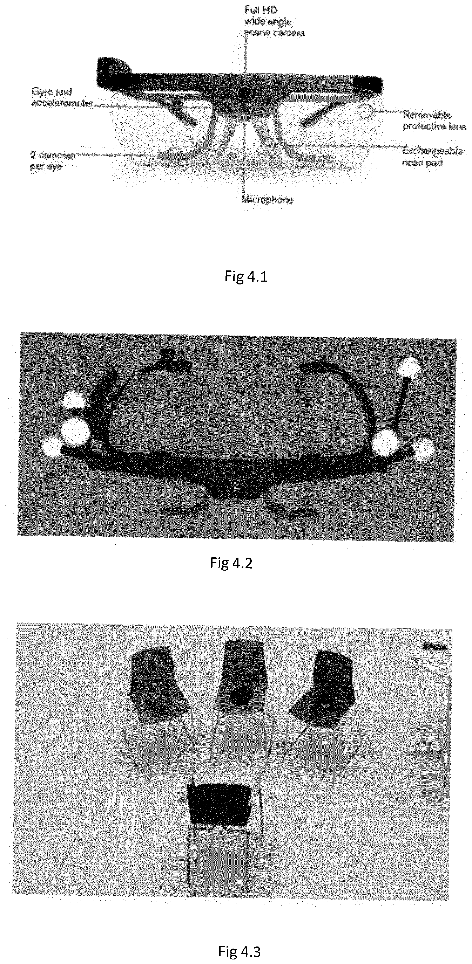

The IMU placement is visualized in Figure 4.1, but as mentioned in Section 3.1 the IMU origin is assumed to coincide with the $b$-frame origin. The resulting measurement model for the accelerometer is defined as

$$y_k^{acc} = R(q_k)\left(a_k - \begin{bmatrix} 0 \\ 0 \\ g \end{bmatrix}\right) + \epsilon_k^{acc}, \qquad (3.2)$$

where $R(q_k)$ is the rotational matrix from the g-frame to the b-frame, parameterised using the unit quaternion. Furthermore, $a_k$ defines the acceleration of the glasses, $g$ the gravitation and $e_k^{acc}$ the measurement noise, distributed $e_k^{acc} \sim N(0, R^{acc})$. Since the use of the IMU is to estimate orientation only, $||a|| \ll g$ will be assumed, the measurement model for the accelerometer is reduced to

$$y_k^{acc} = -R(q_k) \begin{bmatrix} 0 \\ 0 \\ g \end{bmatrix} + e_k^{acc}. \tag{3.3}$$

Furthermore, the influence of large accelerations is mitigated using accelerometer measurements satisfying $|g - ||y^{acc}||| < e^a$, where $e^a$ is a threshold. The gyroscope measurements are defined as

$$y_k^{gyr} = \omega_k + b_k^{gyr} + e_k^{gyr}, \tag{3.4}$$

where $\omega_k$ is the angular velocity of the glasses, $b_k^{gyr}$ the gyroscope bias and $e_k^{gyr}$ the measurement noise which is distributed $e_k^{gyr} \sim N(0, R^{gyr})$.

**Bias Measurement Model**

The use of gaze data to estimate gyroscope bias (GEB) is investigated. Measurements from the gyroscope when the gaze vector is assumed stationary in the b-frame, i.e., when the gaze direction is fix relative to the head, are used as bias measurements. A gaze direction, fix in the b-frame indicates that the head is stationary in the g-frame, if it is assumed that one does not follow a moving object with synchronised eye and head movements. Such a scenario is assumed rare enough to be disregarded. A measurement model for gyroscope bias would be expressed

$$y_k^{bias} = b_k^{gyr} + e_k^{GEB}, \tag{3.5}$$

where $y_k^{bias}$ consists of gyroscope measurements, $b_k^{gyr}$ would be the gyroscope bias and $e_k^{GEB}$ is the corresponding measurement noise, distributed $e_k^{GEB} \sim N(0, R^{GEB})$. Measurement updates are performed after each gaze sample that indicates a fix head.

To determine that the gaze is fix in relation to the b-frame, the angular velocity of the gaze vector between every two eye samples is calculated. If this velocity is below a threshold, $E^{GEB}$, the head is assumed to be stationary and the average of the gyroscope measurements between the samples is used as a bias measurement. This method is similar to I-VT presented in Section 2.5.1 and a threshold is to be chosen. It is of importance that small eye movements are identified and thus, this threshold will have to be chosen low in comparison to when saccades are to be identified as the case is in Section 2.5.1.

**Camera Measurement Models**

Section 3.2 describes the method used for retrieving the two hypotheses to estimate rotation between frames. Let $\delta q^a$ and $\delta q^b$ be the hypotheses expressed in unit quaternion and $\hat{q}_{-1}$, be the estimated orientation at the time of the first frame. Each measurement is generated by rotating $\hat{q}_{-1}$ with ($\delta q^a$, $\delta q^b$) using (2.5), resulting in two hypotheses of the current rotation as measurements, denoted $q^a$ and $q^b$ respectively. Hypothesis testing is performed within the EKF to decide which, if any, of the measurements should be used,

The hypothesis test is conducted by performing the prediction step in (2.7a) and comparing $\hat{q}_{k|k-1}$ with both hypotheses

$$y^{MVO} = \arg\min_{q^a, q^b}\{\|\hat{q}_{k|k-1} - q^a\|, \|\hat{q}_{k|k-1} - q^b\|\}. \qquad (3.6)$$

If $\|y^{MVO} - \hat{q}_{k|k-1}\| < \in^{MVO}$, where $\in^{MVO}$ is a threshold, a measurement update is performed. Otherwise only the prediction step is performed. The resulting measurement model is

$$y_k^{MVO} = q_k + e_k^{MVO}, \qquad (3.7)$$

where $e_k^{MVO}$ is camera measurement noise which is distributed $e_k^{MVO} \sim N(0, R^{MVO})$.

**Gaze Direction Model**

A nearly constant angular velocity model is used to estimate gaze angle and velocity of the gaze vector in the *b*-frame,

$$\underbrace{\begin{bmatrix} \alpha_{k+1} \\ \beta_{k+1} \\ \gamma_{k+1} \\ \delta_{k+1} \end{bmatrix}}_{x_{k+1}^{eye}} = \underbrace{\begin{bmatrix} \mathbf{I}^{2\times2} & T_s\,\mathbf{I}^{2\times2} \\ \mathbf{0}^{2\times2} & \mathbf{I}^{2\times2} \end{bmatrix}}_{F_k^{eye}} \underbrace{\begin{bmatrix} \alpha_k \\ \beta_k \\ \gamma_k \\ \delta_k \end{bmatrix}}_{x_k^{eye}} + \underbrace{\begin{bmatrix} \mathbf{0}^{2\times2} \\ \frac{T_s}{2}\mathbf{I}^{2\times2} \end{bmatrix}}_{N_k^{eye}} \underbrace{\begin{bmatrix} w_k^{\alpha} \\ w_k^{\beta} \end{bmatrix}}_{w_k^{eye}}. \qquad (3.8)$$

The angle between the gaze direction vector and the *b*-frame *xy*-plane is denoted a(alfa) and the angle between the gaze vector and the *b*-frame *xz*-plane is denoted b(beta).

The velocity of *a* is denoted *g(gamma)* and the velocity of *b* is denoted *d(delta).* Physical limits restrict gaze direction, thus *a* and *b* are limited to values between +/-90°. The process noises are distributed,

$w_k^{\alpha} \sim N(0, Q^{\alpha})$ and $w_k^{\beta} \sim N(0, Q^{\beta})$.

Since gaze direction is highly unpredictable and the velocity can vary fast. A constant velocity model might not be the optimal dynamical model to predict gaze. With this in mind, the process noise of the model is set high in comparison to the measurement noise.

**Gaze Measurement Model**

As measurements in the gaze model, eye angles are used. Direction_and_are calculated from the gaze direction vector (gv), depicted as gaze position 3D in Figure 3.3. The measured depth of gaze is highly uncertain why only the direction of gaze is used as measurement. Measurements are calculated by

$$y^{\alpha} = \arctan(gv_z, gv_x), \qquad (3.9a)$$

$$y^{\beta} = \arctan(gv_y, gv_x), \qquad (3.9b)$$

$$y_k^{eye} = \begin{bmatrix} y_k^{\alpha} \\ y_k^{\beta} \end{bmatrix}. \qquad (3.9c)$$

The measurement model is

$$y_k^{eye} = \begin{bmatrix} \alpha_k \\ \beta_k \end{bmatrix} + e_k^{eye}. \qquad (3.10)$$

Measurements will be restricted to less than $\pm 90°$ by physical limits. The measurements noise is distributed $e_k^{eye} \sim N(0, R^{eye})$.

**Saccade/Fixation Classification**

To be able to analyse and possibly predict gaze patterns of a user, the type of eye movement they perform is of advantage to know. To classify whether the user is in a fixation or in a saccade an i-vt filter described in Section 2.5.1 is used and a threshold of gaze velocity in the g-frame is to be set. If the threshold is exceeded, the movement is classified as a saccade, otherwise it is classified as a fixation. The velocity of the eyes in the g-frame is divided into one horizontal and one vertical angular velocity. The vertical velocity is calculated as the difference between g and $w_y$ and the horizontal velocity is calculated as the difference between g and $w_z$. It is assumed that $w_x$ does not affect neither g nor d significantly.

**Face Tracking**

The tracking module estimates the position of faces in the *g*-frame using an EKF given the estimated head orientation from Section 3.3.1 and the position of detected faces obtained as described in Section 3.2.2.

**Dynamic Model**

The output from Section 3.2.2 is an image projection of a 3D point. Since no depth data is available and the origin of the g-frame and c-frame are assumed to coincide, a face position is parameterised as a unit vector, *f*= [*fx*; *fy* ; *fz*], in the g-frame. Each face is assumed to be moving at speeds low enough for a constant position model described by

$$f_{k+1} = f_k + w_k^f, \qquad (3.11)$$

with the process noise $w^f$ distributed $w_k^f \sim N(0, Q^f)$.

**Measurement Model**

A calibrated camera with camera intrinsic matrix K will be used. Using a calibrated camera, normalized camera coordinates *mc,* defined as

$$m^c = K^{-1} \begin{bmatrix} u \\ v \\ 1 \end{bmatrix}, \qquad (3.12)$$

can be used. Where u and v are pixel coordinates of a detected face. From this, a three dimensional unit vector can be obtained as

$$m_{norm}^c = \frac{m^c}{\|m^c\|} = \begin{bmatrix} X \\ Y \\ Z \end{bmatrix},$$

and the corresponding measurement is

$$y_k^f = R_{cb} \begin{bmatrix} X \\ Y \\ Z \end{bmatrix}.$$

This results in a measurement model for a face as

$$y_k^f = R(q_k)f_k + e_k^f, \qquad (3.13)$$

where $R(q_k)$ is the rotational matrix from the *g*-frame to the *b*-frame, $R_{cb}$ the rotational matrix from the *c*-frame to the *b*-frame and $e^f$ the camera measurement noises. The measurements noise is distributed $e_k^f \sim N(0, R^f)$.

**Track Management**

All object detection software will have some degree of false detection. To suppress the impact of these, a couple of data association methods were implemented.

The tracking solution was derived in a pragmatic way until it was considered good enough for the situations in which it was to be used. For each detected face in a frame, a measurement *yf* is generated. Linking *yf* to a face is done using the nearest neighbor method where the angle

$$\alpha^f = \arccos(f \cdot y^f) \qquad (3.14)$$

is calculated for all currently tracked faces. Nearest neighbor is one of the simplest ways of associating measurements with tracks [19] and is assumed to be

enough for the application. *af* is used as a distance measurement and if *af* > E*f* for all tracked faces a new track is initiated. If not, the measurement step of nearest neighbor, i.e the track with smallest *af* is performed. Furthermore, to reduce the number of false detections tracked, a counter for each new track is introduced. For each frame a track does not get any associated measurement, the counter for that track ticks down. If the counter decreases below zero, the track is deleted and if the counter increases to a threshold the track is confirmed. Tracks are also deleted if no measurements can be associated to the track during a set time.

**Hardware**

The glasses used were a pair of Tobii Pro 2 glasses, seen in Figure 4.1. Figure 4.1: Front view Tobii of Pro Glasses 2 [41]. Image rights: Tobii Pro AB.

They are equipped with one front facing monocular camera, eye tracking sensors to record the direction of the eye gaze, an inertial measurement unit (IMU) and a microphone. The scene camera is of type OV2722, a 1080p HD camera from OmniVision. The IMU consists of a gyroscope and accelerometer which are of type L3GD20 and LIS3DH from STMicroelectronics. The eye tracker uses the dark pupil method described in [40]. The glasses provide data using the data structure described in [55].

For ground truth, a Qualisys motion capture (mocap) system was used. The mocap system determines position of reflective markers using cameras. If a rigid body is defined using several markers the position and orientation of objects can be calculated if at least three markers can be located. The Qualisys setup in Visionen laboratory at Linköping University was used. This setup contains twelve cameras covering a room with dimensions 10 m _ 10 m _ 8 m. For synchronisation between the glasses and Qualisys, a hardware synchronisation message was sent to the glasses via a sync cable when the Qualisys recording was started.

**Sound**

For sound recording, hand held microphones were used where each talker had one microphone each. Sound was also recorded with the video from the glasses. For synchronization between the glasses and the microphones, cross-correlation between the recorded audio from the video and the microphones was performed to the extent that was possible. If the cross-correlation sync failed, manual synchronization was used.

**Ground Truth**

As ground truth of the position and orientation of the glasses, six markers placed as in Figure 4.2 were used. Due to lacking performance of the tracking, another setup with the same principal appearance but with larger markers and longer distance between the markers was used.

Figure 4.2: Tobii Pro 2 glasses with Qualisys markers attached.

In the mocap system, the coordinate system of the glasses was defined from the position from where the user was sitting, hence, constant errors might have occurred compared to the estimates if the $g$-frame and $b$-frame were not completely aligned when the body was defined in Qualisys.

The position and orientation of the faces were tracked using three different caps with three markers placed on each. For experiments where the subjects were sitting the caps were associated with a certain chair as seen in Figure 4.3.

Figure 4.3: Experiment setup for experiments with seated subjects. The angular difference from the chair of the user (black) to each of the chairs with caps on them were between 20° and 25°.

To keep in mind, the tracking performance from Qualisys varied a lot and sometimes the rigid bodies had to be redefined, therefore the ground truth should be used conservatively.

**Experiment Descriptions**

In this section, procedures of the performed experiments are explained. For the experiments described in Section 4.4.1 to 4.4.3, four test subjects were used where the one with the glasses will be referred to as the user. The experiments were performed as listed below.

1. Calibrate glasses and start recording on glasses.
2. Start Qualisys recording.
3. Start sound recording.
4. Get into position and start experiment with a clap.
5. Perform experiment.
6. End experiment with a clap.
7. End sound and Qualisys recording.
8. Stop recording on glasses.

**Passive User**

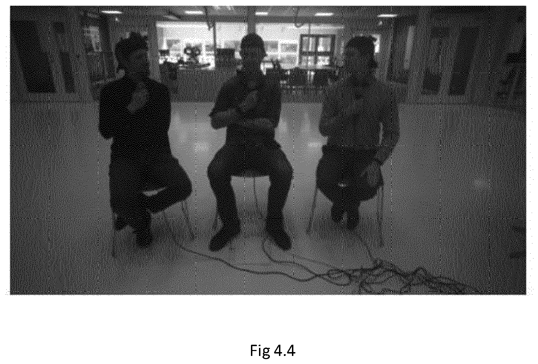

The first two experiments consisted of a passive user following a two minute conversation between three subjects as seen in Figure 4.4. The subjects were placed approximately 20-25° apart from each other from the perspective of the user.

Both experiments were performed twice for each user. For the first experiment (psv1) the user did not rotate their head, thereby using only gaze to follow the conversation. This scenario can be seen as ideal and as reference in performance for tracking and bias mitigation since the subjects were within FOV at all times as seen in Figure 4.4.

Figure 4.5: Typical frame of a PSV1 experiment.

The second experiment (PSV2) was almost identical to PSV1 with the exception that the user was allowed to rotate their head. This is a more natural way of attending a conversation and subjects were not in FOV at all time challenging the tracking solution. Both PSV1 and PSV2 were performed twice for each subject.

**Questions and Answers**

The third experiment (Q&) was comprised of questions and answers for which the subjects asked the user questions from a quiz game. Each subject had five question cards and the user did not know who would ask the next question. The subjects were seated as in Figure 4.4 and the user was allowed to move their head to attend the person who was asking the question. From this experiment, the correlation between gaze direction and current talker should be distinct with a good baseline of how well gaze direction could be used to determine the attention of the user. The experiment time was decided by the duration of the 15 questions and was performed once for each subject.

**Normal Conversation**

During a normal conversion experiment (NormSp), the subjects and the user were standing and held a normal conversation for a non-specified time, once for each subject. This tests the whole system on the CtP problem in the most realistic environment among the tests performed. The user could attend a conversation with one subject while the other two might be having another conversation. From these experiments, data about how often a user is looking at different subjects could be extracted.

**VOR Excitation**

An experiment to excite VOR eye movements (ExpVOR) was performed. The user focused on a point for the whole duration of the experiment while rotating his head back and forth horizontally. The experiment was performed with two distances to the fixation point, one short of about 0:2m and one longer of about 1:5m.

This experiment was performed to clarify how much the difference between eye and head velocity varied during VOR eye movements and how it is affected by the distance to the point of fixation.

**Fixation Dot Stimuli**

An experiment where the user followed a dot stimulus with their gaze (DotSac) was performed. The stimuli involved a red dot which induced horizontal saccades by changing position instantaneously. The dot stimuli were run on a laptop screen and could be set to either only excite long saccades, more than 3_, or excite both long and short saccades. This experiment was used to investigate eye movement classification. Three experiments were performed with the dot stimuli.

In DotSac1 the stimuli which only induced long saccades was used and the user followed the dot with both gaze and head movements. The goal with this experiment was to get information of how well saccades could be identified and separated from VOR eye movements. In DotSac2 the long saccade stimuli was used, but the user rotated his head back and forth for the full duration of the experiment. In DotSac3 the short saccade stimuli was used and the user kept his head still. This experiment was performed to get information of the approximate miniumm angle of saccades one could expect to be able to identify.

**Head Orientation Estimation**

The results of the head orientation estimation will be presented in this section.

First orientation estimates and ground truth for the different experiments are presented, then a dynamic response and the errors it leads to are discussed. Last, how well yaw drift was mitigated estimating gyroscope bias is shown. Through Section 5.1.1 to 5.1.3, the resulting plots for each experiment are from the same test if nothing else is mentioned. For a simpler analysis, ground truth and yaw estimates are set to zero at the start of each test. The experiments that will be presented are from psv1, psv2 and NormSp since they excited the system in different ways. The base EKF uses IMU measurements only and no estimated bias, extensions to the base EKF where different measurements are included are presented with notation in Table 5.1 and described further down.

Table 5.1: Table of measurements used and notations for different orientation estimation methods. GEB represents gaze supported estimation of bias. of represents optical flow.

| Notation\Measurement | IMU | GEB | OF | Key Frames |
|---|---|---|---|---|
| CEKF | X | - | - | - |
| GEKF | X | X | - | - |
| OFEKF | X | - | X | - |
| KYEKF | X | - | - | X |
| GKYEKF | X | X | - | X |

**PSV1**

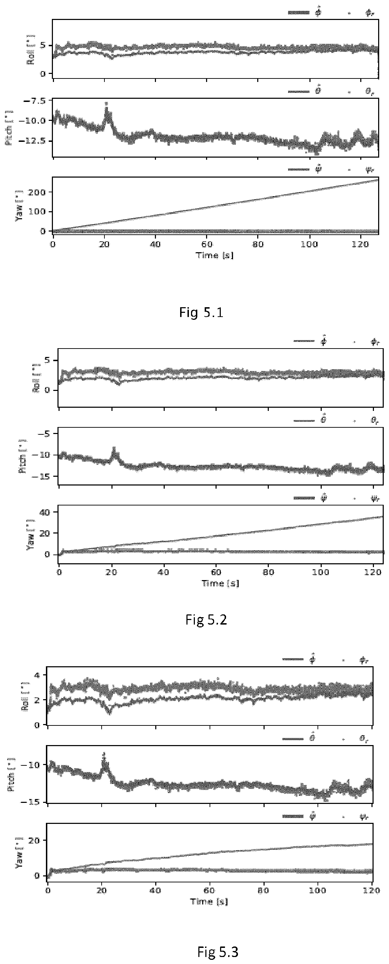

From psv1, the performance of the different methods of mitigating drift is in focus. For reference, the estimated roll, pitch and yaw from the EKF using only the IMU and no bias estimates during an experiment is shown in Figure 5.1 together with ground truth.

Figure 5.1: Roll, pitch and yaw estimation and ground truth with no bias compensation.

The plot shows a test of approximately two minutes where roll and pitch followed ground truth well but yaw drifted more than 200°. A straightforward way to reduce drift would be with a constant bias (cEKF). From a simple test with stationary glasses, the gyroscope constant biases were estimated to $bgyr$ = [4:066; 1:430; 0.9093]$^T$ o/s. With this constant bias, estimates and ground truth are shown in Figure 5.2.

Figure 5.2: Roll, pitch and yaw estimations and ground truth with cEKF during a psv1 test.

With a constant bias there were no significant differences in roll and pitch compared to without bias compensation but the drift in yaw was reduced to approximately 40_in total for the two minute test. For succeeding estimations the constant bias $bgyr$ = [4:066; 1:430; 0.9093]$^T$ o/s will be used when initiating the EKF if nothing else is mentioned.

The use of a constant bias was an improvement compared to not estimating bias, but showed that the gyroscope bias varied over time since drift was still significant. The constant bias was estimated a different day than the experiments were performed which might be the reason for the poor performance. This strengthens the assumption that the variation of gyroscope bias significantly worsens the orientation estimate, thus some way for continuous estimation of bias was desired.

A method investigated for estimating the gyroscope biases was to use eye gaze data to estimate when the user was stationary (gEKF) as described in Section 3.3.1. The resulting roll, pitch and yaw estimates from the EKF are shown in Figure 5.3 which shows a drift of less than 20_ for the two minute test and a flattening yaw estimate.

Figure 5.3: Roll, pitch and yaw estimation using gEKF during a psv1 test.

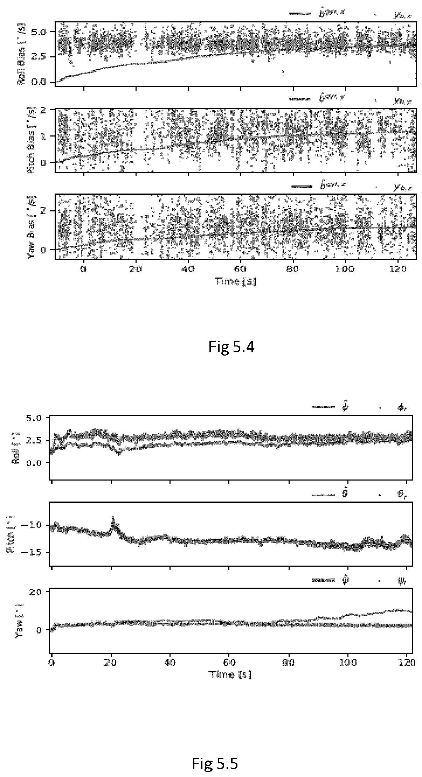

The drift in yaw seemed to decrease throughout the whole test indicating that the bias estimation had not fully converged at the end of the test. To visualize the bias estimation, data from psv1 was used to estimate biases initialized at $bgyr$ = [0; 0; 0]$^T$ o/s. Ten seconds before the start clap the GEB was started and the result is shown in Figure 5.4 where the bias is estimated to about $bgyr$ = [3:7; 1:2; 1:0]$^T$ o/s.

Figure 5.4: Estimated gyroscope biases in roll pitch and yaw during a psv1 test where the GEB was initiated 10 seconds before test began. $yb,$ are bias measurements, i.e. gyroscope measurements when head was estimated to be still.

With the front camera, MVO measurements were obtained and used to estimate orientation. Two different methods for MVO measurements were investigated, of (OFEKF) and key frame (KYEKF). Using OF for MVO measurements the resulting roll, pitch and yaw estimations are shown in Figure 5.5.

Figure 5.5: Roll, pitch and yaw estimation with constant bias $(bgyr$ = [4:066; 1:430; 0:9093]$^T$ o/s) and ofEKF during a psv1 test.

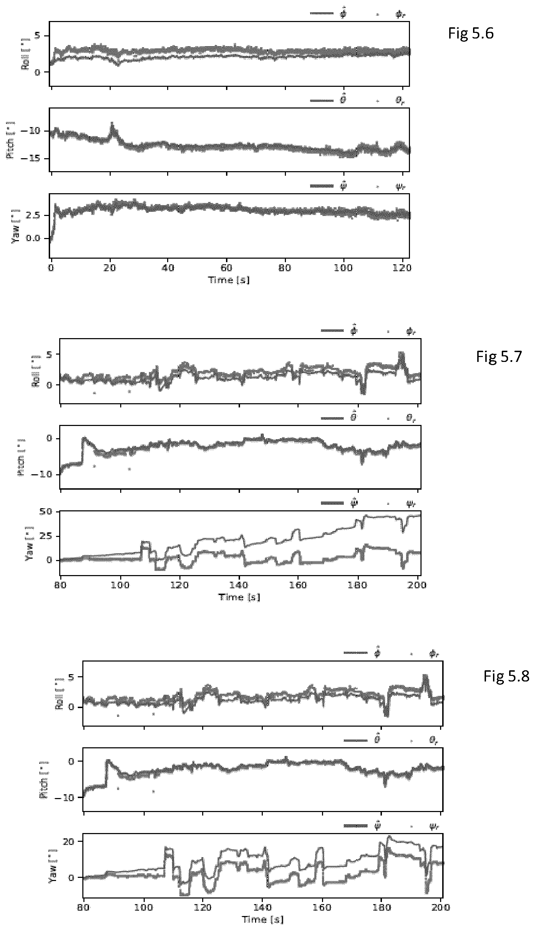

No larger difference in roll and pitch can be seen but the drift in yaw clearly varies and the total estimation error was reduced to less than 10_. The varying drift could be due to movement in the scene or poor camera calibration. The second method, to match orb features in a key frame the resulting estimates from the kyEKF are shown in Figure 5.6.

Figure 5.6: Roll, pitch and yaw estimation with constant bias $(bgyr$ = [4:066; 1:430; 0:9093]$^T$ o/s) and kyEKF during a psv1 test.

With a kyEKF, the estimation error in yaw seemed to be fully mitigated and the dynamics were similar to the other estimation methods.

PSV2

During the psv2 tests, the effect of dynamics could be seen more distinctly compared to psv1. For reference, cEKF with $bgyr$ = [4:066; 1:430; 0:9093]$^T$ o/s was used and is shown in Figure 5.7. The yaw estimate error was slightly below 50_ and the dynamics were following the ground truth with a seemingly constant offset in roll.

Figure 5.7: Roll, pitch and yaw estimation with cEKF and $(bgyr$ = [4:066; 1:430; 0:9093]$^T$ o/s) during a psv2 test.

The result of GEKF is seen in Figure 5.8 where the estimation error was reduced to approximately 10_ over two minutes and dynamics like with cEKF. The discrepancy in drift between psv1 and psv2 is probably due to better GEB measurements in psv2.

Figure 5.8: Roll, pitch and yaw estimation with GEB initiated at $(bgyr$ = [4:066; 1:430; 0:9093]$^T$ o/s) during a psv2 test.

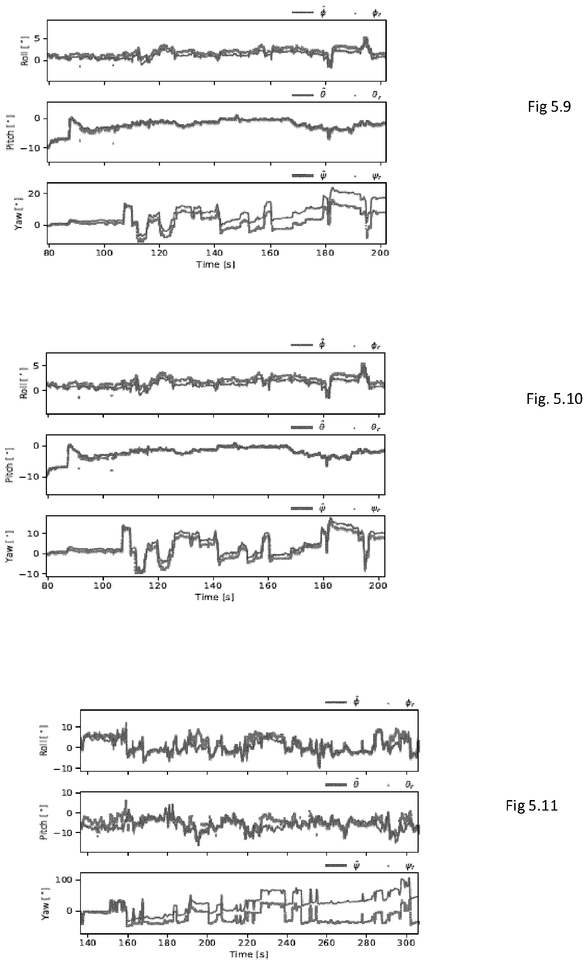

Figures 5.9 and 5.10 shows the results of the ofEKF and kyEKF respectively with bias initiated as $bgyr$ = [4:066; 1:430; 0:9093]$^T$ o/s. No larger differences in roll and pitch can be seen but the estimation error in yaw for the two methods were approximately 10° for OFEKF and 3° for KYEKF after the two minutes. The error in yaw using KYEKF was probably due to that a key frame was lost since most errors should have been mitigated throughout the life time of a key frame. For instances where a new key frame is needed (such as during large movements) only IMU data is available and thus drift and other estimation errors occur.

Figure 5.9: Roll, pitch and yaw estimation with constant bias at $(bgyr$ = [4:066; 1:430; 0:9093] $^T$ o/s) and of during a psv2 test.

Figure 5.10: Roll, pitch and yaw estimation with constant bias at $(bgyr$ = [4:066; 1:430; 0:9093] $^T$ o/s) and key frame during a psv2 test.

**NORMSP**

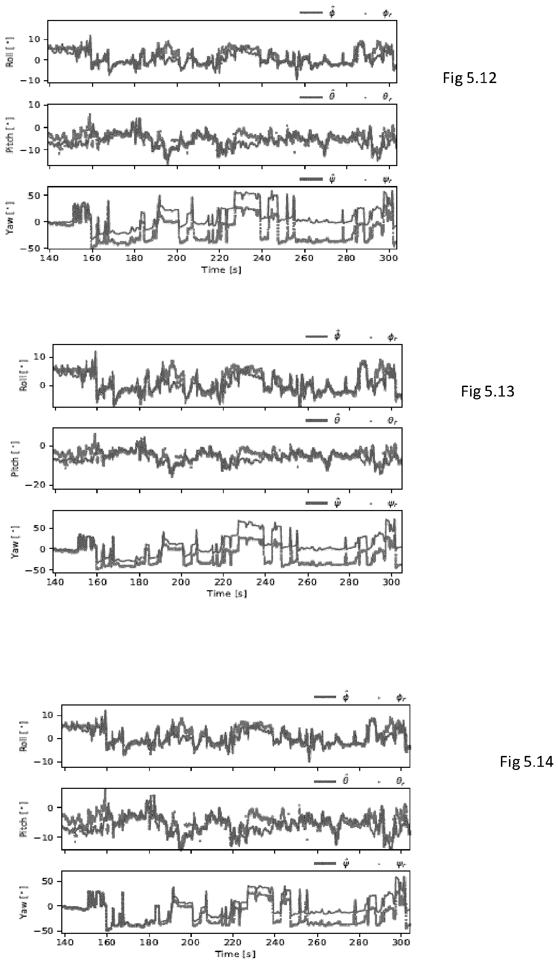

During the NormSp experiments, the subjects and the user were standing which might have induced other dynamics compared to psv1 and psv2. All estimation methods, cEKF, gEKF, ofEKF and kyEKF performed similar in roll and pitch with slightly poor following of the ground truth which is seen in Figure 5.11, 5.12, 5.13 and 5.14 respectively. The total estimation error during the 260 second test for the different methods were approximately 80°, 40°, 40° and 30° for cEKF, gEKF, ofEKF and kyEKF, respectively.

Figure 5.11: Roll, pitch and yaw estimation with constant bias $(bgyr$ = [4:066; 1:430; 0:9093] $^T$ o/s) during a NormSp test.

Figure 5.12: Roll, pitch and yaw estimation with estimated bias initiated at *(bgyr* = [4:066; 1:430; 0:9093] $^T$ o/s) during a NormSp test.

Figure 5.13: Roll, pitch and yaw estimation with constant bias at *(bgyr* = [4:066; 1:430; 0:9093] $^T$ o/s) and of during a NormSp test.

Figure 5.14: Roll, pitch and yaw estimation with constant bias at *(bgyr* = [4:066; 1:430; 0:9093] $^T$ o/s) and key frame during a NormSp test.

Analysis

As the results presented in sections 5.1.1, 5.1.2 and 5.1.3 indicate, including MVO measurements improved the orientation estimate, reducing the error in yaw. Two methods based on MVO were investigated, ofEKF and kyEKF. Using kyEKF resulted in the best estimate for all tests but varied depending on experimental type. For stationary tests and kyEKF no noticeable error in estimation could be seen while for experiments where the user was free to rotate their head, the estimate in yaw deteriorated at large dynamical events. Such events resulted in loss of key frames and any new key frame might have been poor due to blurry images. Without a key frame, no orientation estimate could be obtained. However, if a good key frame was available, no significant error in yaw should occur since the camera measurements are absolute compared to the state the key frame was obtained in. Performance using ofEKF seemed to be more sensitive to external disturbances which was visible during the psv1, Figure 5.5, tests but it also reduced the drift significantly. While using an ofEKF some drift in yaw is expected since the relative state between frames continuously changes.

The benefit of using of is the computational power needed. The preferred method would probably be a combination of both key frames and of as mentioned in Section 3.2.1. A method could be to downsample the key frame loop and using of for the other frames. Furthermore, the current solution using kyEKF only keeps one key frame which could be improved using multiple key frames.

**Dynamic Response**

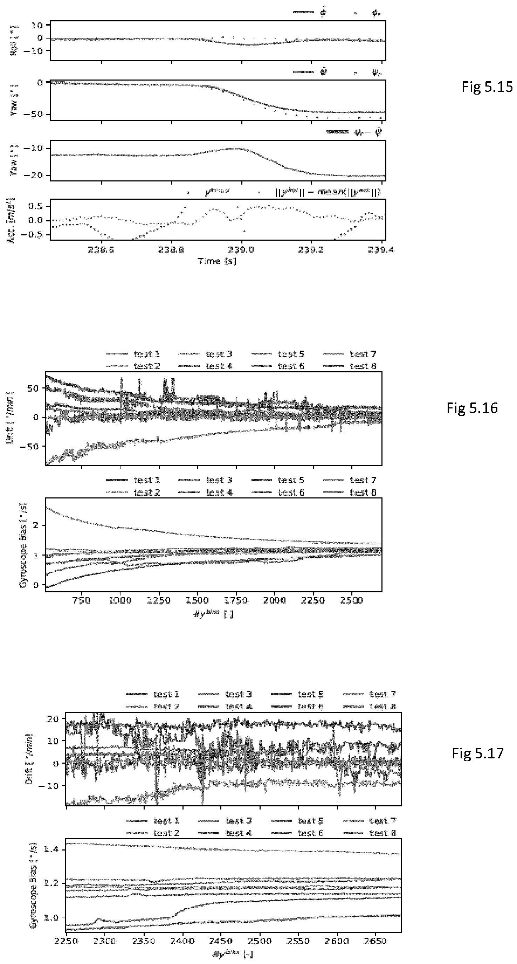

Figure 5.15 shows what influence larger dynamics had on the orientation estimate. It shows that instances where the assumption

$$\|a\| \ll g,$$

(*a* is illustrated by the orange dotted line in the lowermost plot of the figure), was not true the estimate in roll and yaw deteriorated. Roll eventually returned to a more accurate estimate but the loss in yaw was permanent since no absolute measurement of yaw was available.

Figure 5.15: Results from NormSp during a rapid yaw movement. The aim with this plot is to illustrate how model errors affect the estimated orientation.

As results show, performance of the estimation during dynamical events varied. For small angular rates, all estimation methods followed the ground truth dynamics in a satisfactory way while for larger angular rates in yaw, significant estimation errors could occur as can be seen in Figure 5.15. These errors probably originated from the simplification in the accelerometer measurement model. The assumption of

$$\|a\| \ll g,$$

neglecting accelerations, result in that centripetal
and acceleration forces are identified as gravity. This affects roll and pitch estimates since angular rate in z in the *b*-frame is projected to x and *y* in the g-frame, thereby leading to errors. To some extent, these disturbances are mitigated by setting a threshold for the normalized accelerometer vector but a too small threshold would reduce the number of samples too much impairing the estimate and would leave it more sensitive to accelerometer calibration errors. Another aspect which would contradict the use of a threshold was that the accelerometer measurements seemed to depend on the battery voltage, but this has to be further investigated.

Another method of mitigating the impact from large dynamical events can be to include acceleration in the model. Additionally, if the rotational center and angular acceleration was to be estimated, the influence of centripetal forces and acceleration due to rotation could be mitigated.

**Bias Estimation**

In this section, results on how the yaw drift was affected by GEB, described in 3.3.1, are presented. Results from psv1, psv2 and NormSp are depicted to visualize how the bias estimate performed during varying conditions. psv1, where the user was stationary and kept head still, should be less challenging than psv2 and NormSp where the user was allowed to rotate their head. The drift in all plots in this section were calculated as

$$\psi_{drift}(t_1) = \frac{(\hat{\psi}(t_1) - \psi_r(t_1)) - (\hat{\psi}(t_0) - \psi_r(t_0))}{t_1 - t_0}, \qquad (5.1)$$

where the time window ($t1 \square t0$) was set to four seconds. This way of calculating drift will lead to that model errors as described in Section 5.1.5 will show as peaks in drift. Thus, when analyzing the following plots one should keep in mind that peaks in drift without corresponding change in bias estimate is probably not due to a poor bias estimate.

Figure 5.16 shows that the drift for all runs of psv1 was reduced with increasing number of bias measurements. However, the drift did not seem to converge to zero, but rather stagnate somewhere between_15_=min. It would be beneficial to do longer tests to get more data on this and get a more reliable measure.

Figure 5.16: Result of all tests from psv1. Upper plot shows drift in yaw and lower plot shows estimated bias around z-axis. The horizontal axis in the plot contains the number of bias measurements.

Figure 5.17: Zoomed section of the same data as in Figure 5.16, focused to the end of the experiments to clarify which level the drift reached towards the end of the tests.

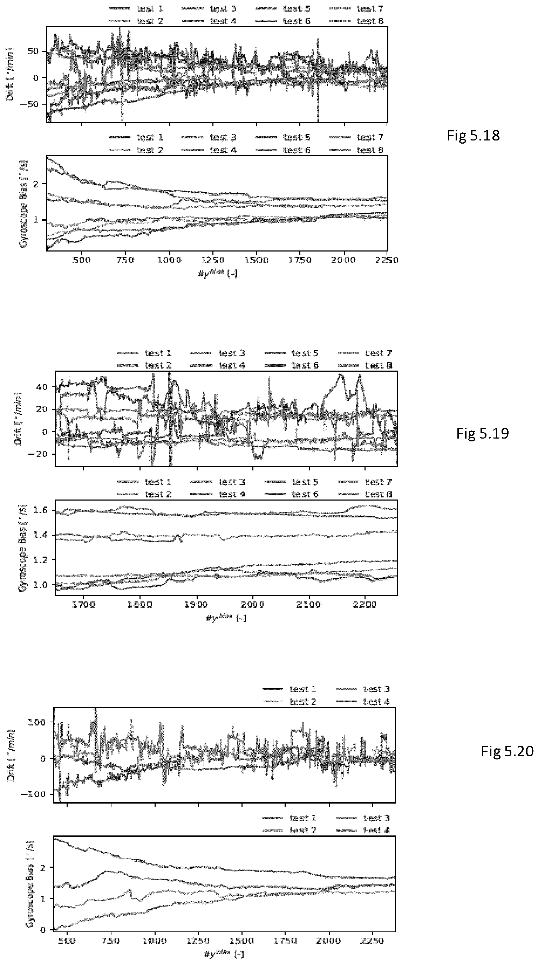

Figure 5.18: Result of all tests from psv2. Upper plot shows drift in yaw and lower plot shows estimated bias around *z*-axis. The horizontal axis in the plot contains the number of bias measurements.

The same appearance as in earlier figures can be seen in Figure 5.18 and 5.20 which are from tests where the user was free to move their head. From these experiments, the drift did not seem to be mitigated as much as in the more stationary psv1, but at least seemed to go below 20° /min for most cases. It can also be seen that the bias estimates for the cases when the user moved their head varied more than for the stationary experiments, which was probably due to that movements of the head leaked into the bias measurements. However, the bias seemed to converge to some stationary level between 1° /s and 1.6° /s for all cases.

Figure 5.19: Zoomed section of the same data as in Figure 5.18, focused to the end of the experiments to clarify which level the drift reached towards the end of the tests.

```
-100
0
100
Drift [_/min]
test 1
test 2
test 3
test 4
500 750 1000 1250 1500 1750 2000 2250
°ybias [-]
0
1
2
Gyroscope Bias [_ /s]
test 1
test 2
test 3
test 4
```

Figure 5.20: Result of all tests from NormSp. Upper plot shows drift in yaw and lower plot shows estimated bias around z-axis. The horizontal axis in the plot contains the number of bias measurements.

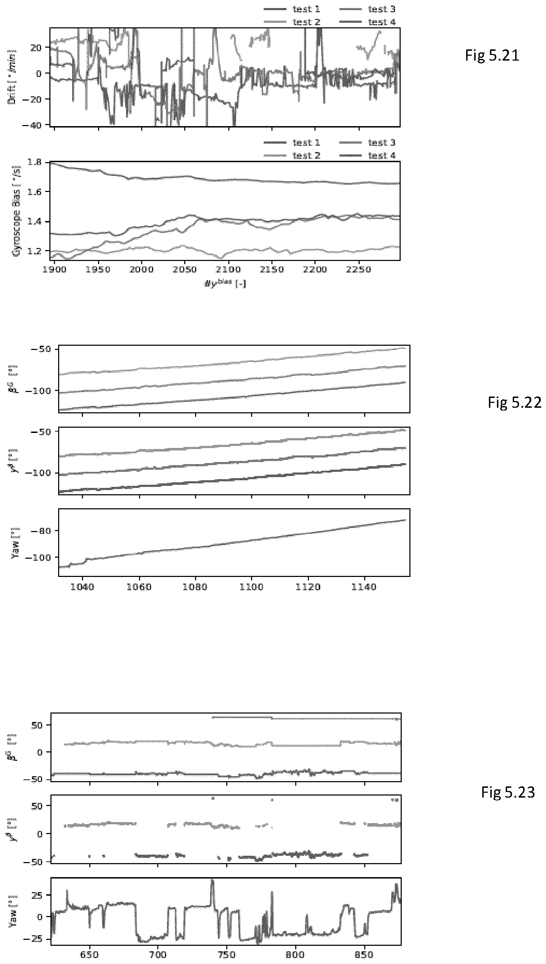

From Figure 5.21, one can tell that the drift was negative for test 1, where the bias was estimated significantly higher than for the other tests. This would imply that the true bias would be a bit lower than what was estimated at the end of the experiment. For test 2, the opposite can be seen with a lower estimate of the bias and a higher drift. As mentioned earlier, longer experiments would be advantageous to get a better measure of the performance of the method to estimate bias.

Figure 5.21: Zoomed section of the same data as in Figure 5.20, focused to the end of the experiments to clarify which level the drift reached towards the end of the tests.

The performance of the bias estimate varied depending on experiment type and the initialisation of the filter. For most experiments, the drift was reduced below 20°/min with GEB, which point toward that this might be a promising way of estimating bias. The drift generally decreased throughout the tests indicating that the bias estimation did not fully converge at the end of the tests. It would be better to perform longer tests to see if the drift tends to stagnate between +/-20° /min or if it converges towards lower drift. Results show that the gaze cannot be used to estimate that the head is still with complete accuracy, since the estimated bias varied significantly more during tests with moving head. However, the bias seemed to possibly converge to some value. With a lower process noise on the bias in the dynamic model, the variance could possibly be reduced and a more steady drift might be achieved.

**Tracking**

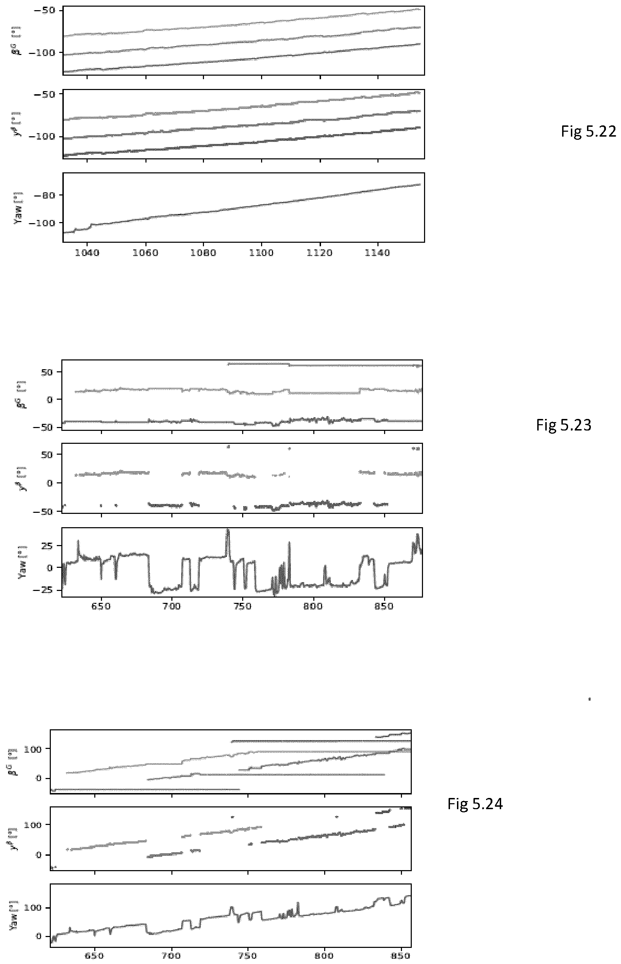

In this section the results regarding tracking will be presented. All plots will be of confirmed tracks as described in Section 3.3.2 and will be from experiments accentuating different behaviors and the influence of different orientation estimation methods will be presented. Any ground truth of the tracking is not included in the plots, as can be seen later in Section 5.4 the face detections using camera can be assumed to be accurate since gaze direction and a track frequently coincide. The detection and tracking of subjects are initiated before the tests began. For a psv1 experiment, using a cEKF the tracker was able to keep tracks during the whole duration of the experiments, even though there was significant drift in yaw, which can be seen in Figure 5.22. The tracks are also clearly drifting which is expected since the estimated direction to faces in the g-frame depends on the estimated orientation.

Figure 5.22: Plots visualising tracks of faces for a psv1 test. Upper plot showing the azIMUth angle to tracked faces in the g-frame. Middle plot shows measurements associated to the tracks in the upper plot. Third plot shows the estimated yaw. cEKF is used for orientation estimation.

For a NormSp test, Figure 5.23 shows the tracks and estimated yaw when using key frames and estimated bias (gKyEKF) and Figure 5.24 shows tracks using cEKF with $bgyr$ = [4:066; 1:430; 0:9093]$T\_$=s. The plots are from an extreme example when faces were not in FOV for extended periods of time. It shows that with a cEKF, tracks were lost and multiple tracks of the same face were created which did not happen using gKyEKF.

Figure 5.23: Plots visualising tracks of faces for a NormSp test. Upper plot showing the azIMUth angle to tracked faces in the g-frame. Middle plot shows measurements associated to the tracks in the upper plot. Third plot shows the estimated yaw. gKyEKF is used for orientation estimation.

Figure 5.24: Plots visualising tracks of faces for a NormSp test. Upper plot showing the global angle to tracked faces in azIMUth. Middle plot shows measurements associated to the tracks in the upper plot. Third plot shows the estimated yaw angle. cEKF is used for orientation estimation.

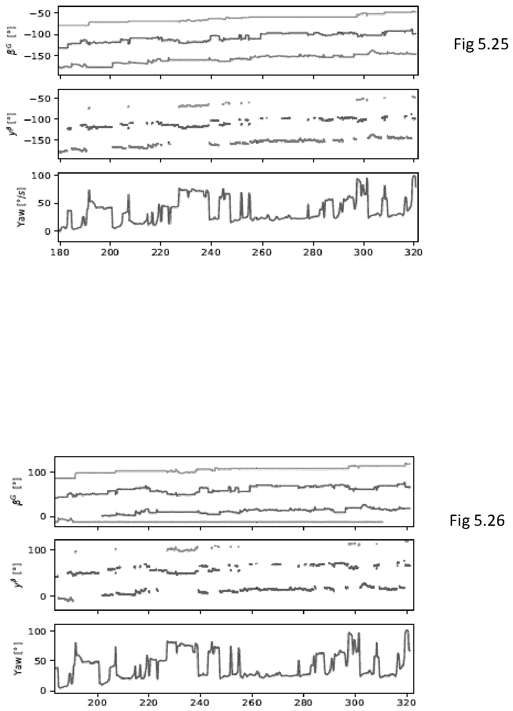

Figures 5.26 and 5.25 shows the tracking result for another NormSp where the different estimation methods were kyEKF in Figure 5.26 and with gKyEKF in Figure 5.25. It shows that one track was lost in the beginning of the experiment while using gKyEKF. Otherwise the tracks were kept for both methods. The track indicated by the orange plot seems to be initiated before a measurement was obtained, but this is not the case. As mentioned earlier, the tracking system was initiated prior to test start, thus, measurements were received before the test began resulting in that the tracks had already been initiated.

Figure 5.25: Plots visualising tracks of faces for a NormSp test. Upper plot showing the global angle to tracked faces in azIMUth. Middle plot shows measurements associated to the tracks in the upper plot. Third plot shows the estimated yaw angle. kyEKF is used for orientation estimation.

Figure 5.26: Plots visualising tracks of faces for a NormSp test. Upper plot showing the global angle to tracked faces in azIMUth. Middle plot shows measurements associated to the tracks in the upper plot. Third plot shows the estimated yaw angle. gKyEKF is used for orientation estimation.

The face tracker performed satisfactory using all investigated EKF methods for tests where detections of faces were frequent. For tests where detections were more sparse due to fast head rotations or when the camera was not directed towards all faces, the need of a good orientation estimate was greatly increased.

With a cEKF there was a greater risk of loosing tracks compared to when using a gKyEKF since the drift was higher with the cEKF. Of the investigated EKF methods, the gKyEKF is assumed to perform best, but this requires that the estimated bias is close to the true bias which is more likely with more bias measurement samples. The experiments were too short for the bias estimates to converge resulting in a poorer performance using the gKyEKF compared to gEKF for some cases early on in the experiments.

The use of a constant position model seemed to be enough to keep track of the faces when the movement of both user and subjects were small enough. The angular dispersion between faces was large enough to associate detections with the correct face for most parts. If larger movements of user and talkers would be allowed, or if subjects would be closer to each other, there would probably be need for a more stringent tracking solution. For those situations a constant position model might not be enough. Also, other solutions such as face recognition software would probably simplify the data association step. Regarding false detections, the use of a counter seemed to serve it purpose. The presented results show no tracks initiated where there was no face.

**Gaze**

This section is to present the results regarding gaze data. Results from ExpVOR and DotSac are displayed. These results are to show how eye movements and head movements correlated as well as how eye and head velocity varied during saccades and fixations.

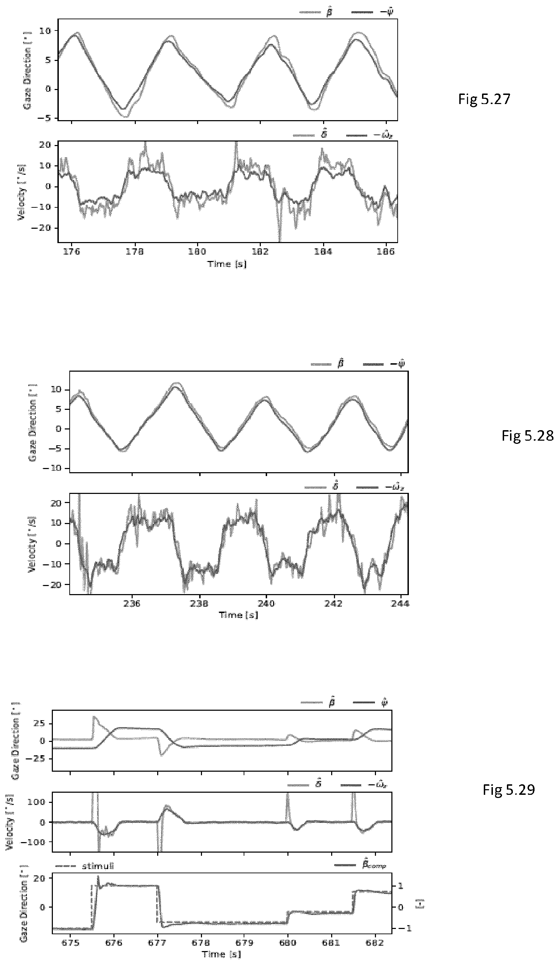

Figure 5.27 and 5.28 from ExpVOR shows that there was correlation between eye and head velocity during fixation. Further, one can see that the eye velocity was higher than the head velocity for *b not* 0 at shorter distances. For the 1:5m fixation, the absolute velocity of eyes and head seemed to be equal, while for the shorter fixation distance, the velocity of eyes was higher than the velocity of the head.

Figure 5.27: Result from ExpVOR with short distance fixation, yaw and yaw rate are plotted with negative signs to clarify how the amplitude of head and eye movements correlate.

Figure 5.28: Result from ExpVOR with long distance fixation, yaw and yaw rate are plotted with negative signs to clarify how the amplitude of head and eye movements correlate.

From Figure 5.29 one can see that a head movement is completed between a half and one second later than the eye movement, which would imply that gaze steering is favorable compared to head steering in terms of speed.

Figure 5.29: Results from DotSac1, where the user follows the dot with both gaze and head direction. Upper plot shows horizontal gaze direction (orange) and estimated yaw angle of the head (blue). Middle plot shows *b*-frame angular velocity around z-axis, gaze (orange) and head (blue). Lower plot shows how the dot in the stimuli was positioned horizontally (red) and gaze direction compensated by head orientation to indicate the gaze direction in g-frame (blue).

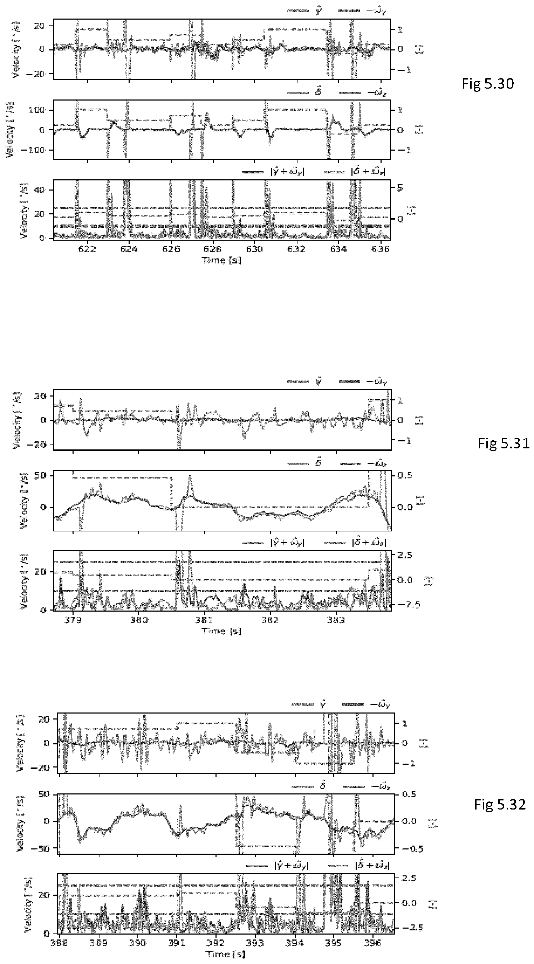

In terms of saccade/fixation classification, Figure 5.30 shows that it should be possible to detect fixation during head movements, depending on which threshold velocity is chosen. As can be seen in the lowermost plot, of Figure 5.30, the difference in velocity between head and eyes typically was below 5°/*s* during fixation with head still and up to 20°/*s* during VOR. A threshold of 10°/*s* lead to that some fixations would be classified as saccades while a higher threshold would fail in classifying short saccades correctly.

In Figure 5.30: A section from DotSac1. Upper plot shows angular velocity around *b*-frame *y*-axis, gaze (orange), head (blue). Middle plot shows angular velocity around *b*-frame *z*-axis, gaze (orange), head (blue). Lower plot shows absolute difference in angular velocity between gaze and head rotation around *b*-frame *y*-axis (orange), *z*-axis (blue). The dot stimuli is indicated by the red dashed line in every plot. Gray dashed lines in the lowermost plot indicate thresholds of 10°/*s* and 25°/*s*.

In Figure 5.31 from DotSac2, one can see that the difference between eye and head velocity during fixation and angular velocity of the head of about 20°/*s* lies around 10°/*s* with some intervals with lower velocity difference. Figure 5.32 is from a section of DotSac2 with head velocity of about 30°/*s*, which gives a larger velocity difference than the section with lower head velocity. To classify what would be fixations based on the stimuli for head velocities around 30°/*s*, a threshold of about 25°/*s* would be needed. However, since there is no ground truth for eye measurements. It cannot be concluded if these larger differences in velocity is due to noisy measurements during motion or if the user performs short saccades to keep their gaze at the dot at higher head velocities. One thing that is not included in the model which would lead to errors is translational motion of the head which would lead to eye movement without corresponding head rotation during fixation.

In Figure 5.31: A section from DotSac2, subject moves head back and forth with angular velocity approximately between □20°/*s* and 20°/*s*. Upper plot shows angular velocity around *b*-frame *y*-axis, gaze (orange), head (blue).

Middle plot shows angular velocity around *b*-frame *z*-axis, gaze (orange), head (blue). Lower plot shows absolute difference in angular velocity between gaze and head rotation around *b*-frame *y*-axis (orange), *z*-axis (blue).

The dot stimuli is indicated by the red dashed line in every plot. Gray dashed lines in the lowermost plot indicate thresholds of 10°/*s* and 25°/*s*.

In Figure 5.32: A section from DotSac2, subject moves head back and forth with angular velocity approximately between +/-30°/*s* and 30°/*s*. Upper plot shows angular velocity around *b*-frame *y*-axis, gaze (orange), head (blue).

Middle plot shows angular velocity around *b*-frame *z*-axis, gaze (orange), head (blue). Lower plot shows absolute difference in angular velocity between gaze and head rotation around *b*-frame *y*-axis (orange), *z*-axis (blue).

The dot stimuli is indicated by the red dashed line in every plot. Gray dashed lines in the lowermost plot indicate thresholds of 10°/*s* and 25°/*s*.

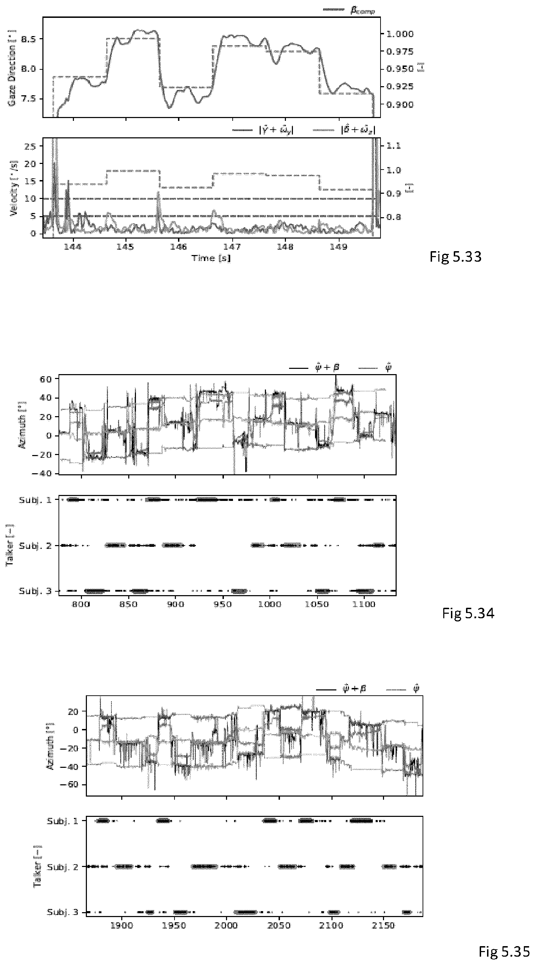

Figure 5.33 depicts a section from DotSac3 which contains saccades below 1_.

The section contains four saccades of about 0:5_ and one saccade of less than 0:1_. Three of the 0:5_ saccades give velocities exceeding 5°/*s* which could be identifiable, the last 0:5_ saccade is not identifiable in the velocity plot, but could be identified by analyzing gaze direction. The saccade of less than 0:1_ is practically not identifiable. The 0:5_ saccades are however, based on the results from DotSac2 where a threshold of at least 10_ was needed, hard to identify during head motion.

Figure 5.33: A section from DotSac with short saccades. In both upper and lower plot, the horizontal position of the dot in the stimuli is indicated by the red dashed line. In the upper plot horizontal gaze direction is blue. in the lower plot *b*-frame angular velocity is shown, around *y*-axis orange and around *z*-axis blue. Gray dashed lines indicate threshold levels 5°/*s* and 10°/*s*.

The results from the ExpVOR experiments indicate that eye gaze data could be used to support the yaw estimate using VOR, since gaze direction and yaw correlated well during fixation. They also show a dependency of depth of gaze which would be expected. Due to translational movement of the eyes while the head rotates an overestimation of the yaw angle occurred. This overestimation depended on the depth of gaze and was smaller at longer distances. If the rotational center of the head and the depth of gaze could be estimated, a better measurement model could be created. Otherwise, only measurements where the depth of gaze is large enough would be preferred. If gaze is to be used to support the yaw estimate, an accurate fixation classifier is crucial since head movements and gaze only correlate during fixation as mentioned in Section 2.5.1.

The results from DotSac1 showed that, saccades to follow the dot stimuli was performed significantly faster than the rotation of the head. This implies that using eye data compared to only using head direction for steering, could notably improve performance in terms of speed which aligns with previous results from among others [22] and [13]. The detection of saccadic movements was not as clear since it was highly dependent on the amplitude of the saccade. As mentioned in Section 2.5.1, a threshold between 30°/s and 70°/s has performed well in other studies. This would coincide well with results in Figure 5.32 where one can see eye velocities up to 30_=s during fixation. If a high threshold for saccadic movement was set, all fixations were detected but also smaller saccades were classified as fixations which would be a problem if they were to be used for estimating bias or orientation. The opposite would be true with a lower threshold, where most saccades would be detected but also some fixations would be falsely detected as saccades, especially when the head of the user was rotated and VOR eye movements were excited.

With an accurate head orientation estimation, one could have some measure of how much the gaze point moves over a longer time interval to possibly determine if the focus of the wearer is directed to some delimited area instead of accurately trying to classify every saccade and fixation.

**Attention Estimate**

Results on the system which aim to illustrate how it can be used to estimate the attention of the user are presented below. Plots show tracked faces along with gaze and head direction. The orientation was estimated with gKyEKF for all plots in this section. To have some kind of reference on where the user might have directed their attention, it will be indicated when the sound level from each subjects microphone exceeded a threshold.

Figure 5.34: Result from Q&A, upper plot shows direction to each of the tracked faces in blue, orange and green. The gaze direction of the user is indicated with a black line and the yaw angle of the user is indicated by a gray line. Lower plot indicates when the sound level of each microphone exceeded a threshold in black. When each subject asked a question is indicated with the color for the respective track.

Figure 5.35: Result from Q&A with another user than in Figure 5.34, upper plot shows direction to each of the tracked faces in blue, orange and green.

The gaze direction of the user is indicated with a black line and the yaw angle of the user is indicated by a gray line. Lower plot indicates when the sound level of each microphone exceeded a threshold in black. When each subject asked a question is indicated with the color for the respective track.

Both Figure 5.34 and 5.35 shows that the user tended to direct their gaze towards

any of the subjects for most of the time. This implies that one is likely to direct one's gaze towards a person while being part of a conversation. One can also see that the head direction of the user often was not directed completely towards the one they directed their gaze to. In the test presented in Figure 5.35 the user performed saccades away from and back to the one they listened to quite frequently during Q&A. The same behavior cannot be seen in Figure 5.34 also from Q&A

but with another user indicating that how one directs one's gaze is varying among individuals.

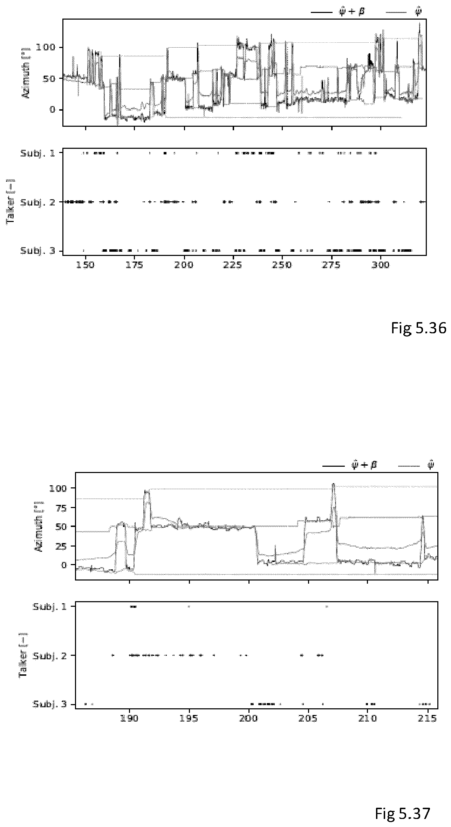

Figure 5.36: Result from NormSp, upper plot shows direction to each of the tracked faces in blue, orange, green and red. The gaze direction of the user is indicated with a black line and the yaw angle of the user is indicated by a gray line. Lower plot indicates when the sound level of each microphone exceeded a threshold.

In NORMSP, where the subjects were positioned such that the angles between them were considerably large, a significantly long time could pass without any measurements from the face detector associated to a certain face. This can be seen in Figure 5.36 where the tracks follow a straight line when the user was not directly directed towards the corresponding face and thus did not get any detection for that face. As mentioned in Section 5.2, several tracks can be initiated for the same face if the drift is high enough between face detections. However, one can clearly see that as soon as the user is directed towards any of the faces, the track is updated with a new measurement. One could also argue that, based on the information in the lower plot in Figure 5.36, the user was likely to direct their gaze towards the subject that was talking. This is especially clear when looking at Subject 1 which does not talk that much compared to Subjects 2 and 3 but for several of the instances where Subject 1 actually talks, the user directs their gaze at him.

Figure 5.37: A section from the same result that was presented in Figure 5.36 where one can see that head movements to change direction were initiated before a saccade was performed. The points of interest are, ~189$s$, ~204$s$ and ~214$s$.

The assumption that gaze data would be beneficial to steer with in terms of speed seemed to hold for most cases. However, as can be seen in Figure 5.37 one could see that head movements were initiated before the gaze was moved for some saccades. This could probably be used to predict a direction of where the user is about to direct their attention.

Based on presented results, it should be possible to determine the attention of a user with the system developed for situations like in the experiments. To get an accurate determination of direction, a well performing head orientation estimation would be beneficial. It seemed like, for most of the experiments, the system at hand would perform well enough. However, this was dependent on that no translational movements of neither user nor subjects were allowed. As can be seen in the results, the user tended to direct their gaze towards a face, thus, solutions to steer beamformers like the ones described in [24] could possibly be implemented with the system for further evaluation.

A satisfactory result of the face tracking was achieved using an extended Kalman filter with a constant position model to track faces parametrized as a unit vector to the track. Measurements consisted of face detections retrieved using a *Mobile-FaceNets* face detector. The system was used to track up to three faces, but no upper limit of the number of faces possible to track was investigated. The sensitivity to orientation estimate errors was highly dependent on the frequency of the detections resulting in multiple tracks of the same face being created during experiments with less frequent detections and varying orientation errors. False detections were handled successfully meaning no tracks were initiated on false detections.

- How should the gaze data be interpreted?
- Can eye data be used to support yaw estimate?
- Can eye data be used to estimate a talker of interest?

The use of eye data to support yaw estimate seems promising where two methods has been investigated. Using eye gaze to estimate gyroscope bias has been implemented and reduced yaw drift, further, the use of VOR movements as yaw measurements also looks to have some potential. An important aspect for these methods to work is a robust classifier of eye movements. The use of an I-VT filter to classify eye movements was investigated. Results point towards that such a filter could perform well in identifying saccades. However, the result is highly dependent on the threshold and a choice has to be made of how short saccades one is interested in identifying. Moreover, gaze direction seemed to be a good indication of whether someone was attending a talker since gaze direction and current talker frequently coincided.

The overall objective given the stated limitations has been achieved. The system can be used to track faces in the environment of a user and gaze direction can be used to estimate attention.

It is intended that the structural features of the devices described above, either in the detailed description and/or in the claims, may be combined with steps of the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method is not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

REFERENCES

- Holmqvist, K (2015) A comprehensive guide to methods and measures
- [1] David Alais and David Burr. The ventriloquist effect results from nearoptimal bimodal integration. Current biology, 14(3):257-262, 2004.
- [2] Mordvintsev Alexander and Revision Abid K. Fast algorithm for corner detection, 2013. URL https://opencv-python-tutroals. readthedocs.io/en/latest/py_tutorials/py_feature2d/py_ fast/py_fast.html. Accessed: 2020-06-11.
- [3] Mordvintsev Alexander and Revision Abid K. Shi-tomasi corner detector good features to track, 2013. URL https://opencv-python-tutroals.readthedocs.io/en/latest/py_ tutorials/py_feature2d/py_shi_tomasi/py_shi_tomasi.html. Accessed: 2020-06-11.
- [4] Herbert Bay, Tinne Tuytelaars, and Luc Van Gool. SURF: Speeded Up Robust Features. In Ales Leonardis, Horst Bischof, and Axel Pinz, editors, Computer Vision - ECCV 2006, pages 404-417, Berlin, Heidelberg, 2006. Springer Berlin Heidelberg.
- [5] Pierre Bour, Emile Cribelier, and Vasileios Argyriou. Chapter 14 - crowd behavior analysis from fixed and moving cameras. In Xavier Alameda-Pineda, Elisa Ricci, and Nicu Sebe, editors, Multimodal Behavior Analysis in the Wild, Computer Vision and Pattern Recognition, pages 289 - 322. Academic Press, 2019.
- [6] Adelbert Bronkhorst. The cocktail party phenomenon: A review of research on speech intelligibility in multiple-talker conditions. Acta Acustica united with Acustica, 86:117-128, 01 2000.
- [7] Sheng Chen, Yang Liu, Xiang Gao, and Zhen Han. MobileFaceNets: Efficient CNNs for Accurate Real-Time Face Verification on Mobile Devices. In Jie Zhou, Yunhong Wang, Zhenan Sun, Zhenhong Jia, Jianjiang Feng, Shiguang Shan, Kurban Ubul, and Zhenhua Guo, editors, Biometric Recognition, pages 428-438, Cham, Switzerland, August 2018. Springer International Publishing.
- [8] E. Colin Cherry. Some experiments on the recognition of speech, with one and with two ears. The Journal of the Acoustical Society of America, 25(5): 975-979, 1953.
- [9] C. Chuanqi, H. Xiangyang, Z. Zhenjie, and Z. Mandan. Monocular visual odometry based on optical flow and feature matching. In 2017 29th Chinese Control And Decision Conference (CCDC), pages 4554-4558, May 2017.
- [10] D. Fitzpatrick et al D. Purves, GJ Augustine. Neuroscience Third edition. Sinauer Associates, Inc., 23 Plumtree Road Sunderland, MA 01375 U.S.A, 2004.
- [11] J. Delmerico and D. Scaramuzza. A benchmark comparison of monocular visual-inertial odometry algorithms for flying robots. In 2018 IEEE International Conference on Robotics and Automation (ICRA), pages 2502-2509, Brisbane, Australia, May 2018.
- [12] Konstantinos G Derpanis. Overview of the RANSAC algorithm. ImageRochester NY, 4(1):2-3, 2010.
- [13] Antoine Favre-Félix, Carina Graversen, Renskje K. Hietkamp, Torsten Dau, and Thomas Lunner. Improving speech intelligibility by hearing aid eyegaze steering: Conditions with head fixated in a multitalker environment. Trends in Hearing, 22:2331216518814388, 2018.
- [14] Guillermo Gallego, Elias Mueggler, and Peter Sturm. Translation of "Zur Ermittlung eines Objektes aus zwei Perspektiven mit innerer Orientierung" by Erwin Kruppa (1913). arXiv 1801.01454, 12 2017.
- [15] D. GEBre-Egziabher, G. H. Elkaim, J. D. Powell, and B. W. Parkinson. A gyro-free quaternion-based attitude determination system suitable for implementation using low cost sensors. In IEEE 2000. Position Location and Navigation Symposium (Cat. No.00CH37062), pages 185-192, March 2000.
- [16] Ross Girshick. Fast R-CNN. In The IEEE International Conference on Computer Vision (ICCV), Santiago, Chile, December 2015.
- [17] Ross Girshick, Jeff Donahue, Trevor Darrell, and Jitendra Malik. Rich feature hierarchies for accurate object detection and semantic segmentation. In The IEEE Conference on Computer Vision and Pattern Recognition (CVPR), Columbus, Ohio, June 2014.
- [18] Massimo Gneo, Maurizio Schmid, Silvia Conforto, and Tommaso D'Alessio. A free geometry model-independent neural eye-gaze tracking system. Journal of neuroengineering and rehabilitation, 9:82, 11 2012.
- [19] Fredrik Gustafsson. Statistical Sensor Fusion. Studentliterature AB, Sweden, Lund, 2012. ISBN 978-91-44-07732-1.
- [20] Dan Hansen and Qiang Ji. In the eye of the beholder: A survey of models for eyes and gaze. IEEE transactions on pattern analysis and machine intelligence, 32:478-500, 03 2010.

- [21] Christopher G Harris, Mike Stephens, et al. A combined corner and edge detector. In Alvey vision conference, volume 15, pages 10-5244. Citeseer, 1988.
- [22] Jamie Hart, Dumitru Onceanu, Changuk Sohn, Doug Wightman, and Roel Vertegaal. The attentive hearing aid: Eye selection of auditory sources for hearing impaired users. In Human-Computer Interaction - INTERACT 2009, pages 19-35, Berlin, Heidelberg, 2009. Springer Berlin Heidelberg.
- [23] Richard Hartley and Andrew Zisserman. Multiple View Geometry in Computer Vision. Cambridge University Press, New York, NY, USA, 2 edition, 2003.
- [24] P. Hoang, Z. Tan, J. M. de Haan, T. Lunner, and J. Jensen. Robust bayesian and maxIMUm a posteriori beamforming for hearing assistive devices. In 2019 IEEE Global Conference on Signal and Information Processing (GlobalSIP), pages 1-5, Ottawa, Canada, Nov 2019.
- [25] Jianbo Shi and Tomasi. Good features to track. In 1994 Proceedings of IEEE Conference on Computer Vision and Pattern Recognition, pages 593-600, June 1994.
- [26] Rudolph Emil Kalman. A New Approach to Linear Filtering and Prediction Problems. Transactions of the ASME-Journal of Basic Engineering, 82(Series D):35-45, 1960.
- [27] Sergei Kochkin. MarkeTrak V: "Whymy hearing aids are in the drawer": The consumers' perspective. The Hearing Journal, 53(2):34, 36, 39-41, 2000.
- [28] Oleg V. Komogortsev, Sampath Jayarathna, Do Hyong Koh, and SandeepMunikrishne Gowda. Qualitative and quantitative scoring and evaluation of the eye movement classification algorithms. In Proceedings of the 2010 Symposium on Eye-Tracking Research Applications, ETRA'10, page 65-68, New York, NY, USA, March 2010. Association for Computing Machinery.
- [29] Erwin Kruppa. Objektes aus zwei Perspektiven mit Innerer Orientierung. Sitzungsberichte der Mathematisch-Naturwissenschaftlichen Kaiserlichen Akademie der Wissenschaften, 122:1939-1948, 1913.
- [30] J. B. Kuipers. Quaternions Rotation Sequences: A Primer with Applications to Orbits. Aerospace and Virtual Reality, Princeton University Press, Princeton, New Jersey, 1999.
- [31] I.Hunter L. Tangorra, L. Jones. System identification of the human vestibuloocular reflex during head-free tracking. In Journal of Vestibular Research, volume 14, pages 419-441, Paris, France, Sep 2004.
- [32] David G Lowe. Object recognition from local scale-invariant features. In Proceedings of the seventh IEEE international conference on computer vision, volume 2, pages 1150-1157. Ieee, September 1999.
- [33] Bruce D. Lucas and Takeo Kanade. An iterative image registration technique with an application to stereo vision. In Proceedings of the 7th International Joint Conference on Artificial Intelligence - Volume 2, IJCAI'81, page 674-679, San Francisco, CA, USA, Aug 1981. Morgan Kaufmann Publishers Inc.
- [34] J. L. Marins, Xiaoping Yun, E. R. Bachmann, R. B. McGhee, and M. J. Zyda. An extended kalman filter for quaternion-based orientation estimation using marg sensors. In Proceedings 2001 IEEE/RSJ International Conference on Intelligent Robots and Systems. Expanding the Societal Role of Robotics in the the Next Millennium (Cat. No.01CH37180), volume 4, pages 2003-2011 vol.4, August 2001.
- [35] Nicole Marrone, Christine R. Mason, and Jr. Gerald Kidd. Evaluating the benefit of hearing aids in solving the cocktail party problem. Trends in Amplification, 12(4):300-315, 2008.
- [36] L. J. Nelleman. The benefits and user experience of hearing aids controlled by eye gaze of the user. Master's thesis, Aalborg University, January 2020.
- [37] D. Nister. An efficient solution to the five-point relative pose problem. IEEE Transactions on Pattern Analysis and Machine Intelligence, 26(6):756-770, June 2004.
- [38] World Health Organization. Deafness and hearing loss, 2019. URL https://www.who.int/news-room/fact-sheets/detail/ deafness-and-hearing-loss. Accessed: 2020-06-11.
- [39] Blignaut Peiter. Fixation identification: The optIMUm threshold for a dispersion algorithm. Attention, Perception, Psychophysics, 71:881-895, 12 2009.
- [40] Tobii Pro. Dark and bright pupil tracking, 2020. URL https://www.tobiipro.com/ learn-and-support/learn/eye-tracking-essentials/ what-is-dark-and-bright-pupil-tracking/. Accessed: 2020-06-11.
- [41] Tobii Pro. Tobii pro glasses 2, 2020. URL https://www.tobiipro.com/ product-listing/tobii-pro-glasses-2/. Accessed: 2020-06-11.
- [42] Joseph Redmon and Ali Farhadi. Yolo9000: better, faster, stronger. In Proceedings of the IEEE conference on computer vision and pattern recognition, pages 7263-7271, Honolulu, Hawaii, July 2017.
- [43] Joseph Redmon and Ali Farhadi. Yolov3: An incremental improvement. arXiv preprint arXiv:1804.02767, 2018.
- [44] Joseph Redmon, Santosh Divvala, Ross Girshick, and Ali Farhadi. You only look once: Unified, real-time object detection. In Proceedings of the IEEE conference on computer vision and pattern recognition, pages 779-788, Las Vegas, Nevada, USA, June 2016.
- [45] S. Ren, K. He, R. Girshick, and J. Sun. Faster r-cnn: Towards real-time object detection with region proposal networks. IEEE Transactions on Pattern Analysis and Machine Intelligence, 39(6):1137-1149, 2017.
- [46] Seán G Roberts, Francisco Torreira, and Stephen C Levinson. The effects of processing and sequence organization on the timing of turn taking: a corpus study. Frontiers in psychology, 6:509, 2015.

- [47] Edward Rosten and Tom Drummond. Machine learning for high-speed corner detection. In Ales Leonardis, Horst Bischof, and Axel Pinz, editors, Computer Vision - ECCV 2006, pages 430-443, Berlin, Heidelberg, May 2006. Springer Berlin Heidelberg.
- [48] Ethan Rublee, Vincent Rabaud, Kurt Konolige, and Gary Bradski. ORB: an efficient alternative to SIFT or SURF. pages 2564-2571, 11 2011.
- [49] Dario Salvucci and Joseph Goldberg. Identifying fixations and saccades in eye-tracking protocols. pages 71-78, November 2000.
- [50] D. Scaramuzza and F. Fraundorfer. Visual odometry [tutorial]. IEEE Robotics Automation Magazine, 18(4):80-92, 2011.
- [51] Shuster, Malcolm D. A survey of attitude representations. Navigation, 8(9):
- 439-517, 1993.
- [52] W.E. Hamilton, SirW.R. Hamilton. Elements of quaternions. London, Longmans, Green, Co., 1866.
- [53] G.L. Smith, S.F. Schmidt, and L.A. McGee. Application of statistical filter theory to the optimal estimation of position and velocity on board a circumlunar vehicle. Technical Report TR R-135, NASA, 1962.
- [54] Y. Tian,W. R. Hamel, and J. Tan. Accurate human navigation using wearable monocular visual and inertial sensors. IEEE Transactions on Instrumentation and Measurement, 63(1):203-213, 2014.
- [55] Tobii Pro Glasses 2 API Developer's Guide. Tobii Pro, The address of the publisher, 1.3 edition, 8 2018.
- [56] Tinne Tuytelaars and Krystian Mikolajczyk. Local invariant feature detectors: A survey. Foundations and Trends® in Computer Graphics and Vision, 3(3):177-280, 2008.
- [57] D. Unsal and K. Demirbas. Estimation of deterministic and stochastic IMU error parameters. In Proceedings of the 2012 IEEE/ION Position, Location and Navigation Symposium, pages 862-868, April 2012.
- [58] A. Villanueva and R. Cabeza. A novel gaze estimation system with one calibration point. IEEE Transactions on Systems, Man, and Cybernetics, Part B (Cybernetics), 38(4):1123-1138, 2008.
- [59] Feng Yuri. Real time face recognition with cpu, 2019. URL https://towardsdatascience.com/ real-time-face-recognition-with-cpu-983d35cc3ec5.
- [60] Y. Zhang, W. Liang, H. He, and J. Tan. Wearable heading estimation for motion tracking in health care by adaptive fusion of visual-inertial measurements. IEEE Journal of Biomedical and Health Informatics, 22(6):1732-1743, 2018.
- [61] Elana Zion Golumbic, Gregory B. Cogan, Charles E. Schroeder, and David Poeppel. Visual input enhances selective speech envelope tracking in auditory cortex at a "cocktail party". Journal of Neuroscience, 33(4):1417-1426, 2013.

**Claims**

1. A hearing system comprising a hearing device, the hearing device being adapted for being worn by a user, the hearing system comprising

   - an audio input unit configured to receive a multitude of audio signals comprising sound from a number of localized sound sources in an environment around the user, and
   - a sensor unit configured to receive and/or provide sensor signals from one or more sensors, said one or more sensors being located in said environment and/or form part of said hearing system, and
   - a first processor configured to generate and update over time data representative of a map of said environment of the user, said data being termed map data, said environment comprising a number of, stationary or mobile, landmarks, said landmarks comprising said number of localized sound sources, and said map data being representative of the physical location of said landmarks in the environment relative to the user,

   wherein the audio input unit comprises a microphone array comprising a multitude of microphones for picking up sound from said environment and providing respective microphone signals comprising sound from said number of localized sound sources and providing at least some of said multitude of audio signals, and wherein the hearing system comprising a head worn frame or structure whereon at least some, such as all, of said multitude of microphones are located.

2. A hearing system according to any one of claims 1-16 wherein the hearing device comprises a hearing aid, a headset, an earphone, an ear protection device or a combination thereof.

3. A method of operating a hearing system comprising a hearing device, e.g. a hearing aid, the hearing device being adapted for being worn by a user, the method comprising

- receiving and/or providing audio signals comprising sound from said number of localized sound sources in an environment around the user,
- receiving sensor signals from one or more sensors, said one or more sensors being located in said environment and/or form part of said hearing system,
- generating and updating over time data representative of a map of said environment of the user, said data being termed map data, said environment comprising a number of, stationary or mobile, landmarks, said landmarks comprising a number of localized sound sources, and said map data being representative of the physical location of said landmarks in the environment relative to the user;
- generating and updating over time said map data based on said audio signals and said sensor signals.

Fig 1a

Fig 1b

Fig 1.1a

Fig 1.1b

Fig 2.1

Fig 2.2

## Tobii Pro Glasses 2

Fig 3.1

Fig 3.2

Origin Coordinates
(Centre of Scene
Camera).

Y

X

Z

Gaze Direction
Vector
(X, Y, Z)

Pupil Centre
Coordinates
(X, Y, Z)

Gaze Position 3D
Coordinates
(X, Y, Z)

Fig 3.3

Fig 3.4

Fig 3.5

Fig 3.6

Fig 4.1

Fig 4.2

Fig 4.3

Fig 4.4

Fig 5.1

Fig 5.2

Fig 5.3

Fig 5.4

Fig 5.5

Fig 5.6

Fig 5.7

Fig 5.8

Fig 5.9

Fig. 5.10

Fig 5.11

Fig 5.12

Fig 5.13

Fig 5.14

Fig 5.15

Fig 5.16

Fig 5.17

Fig 5.18

Fig 5.19

Fig 5.20

EP 3 962 099 A1

Fig 5.21

Fig 5.22

Fig 5.23

54

Fig 5.22

Fig 5.23

Fig 5.24

Fig 5.25

Fig 5.26

Fig 5.27

Fig 5.28

Fig 5.29

Fig 5.30

Fig 5.31

Fig 5.32

Fig 5.33

Fig 5.34

Fig 5.35

Fig 5.36

Fig 5.37

FIGURE 6

Fig 7a

Fig 7b

Fig 8a

Fig 8b

Fig 9a

Fig 9b

Fig 9c

Europäisches
Patentamt

European
Patent Office

Office européen
des brevets

# EUROPEAN SEARCH REPORT

Application Number

EP 21 19 3519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/174237 A1 (LUNNER THOMAS [DK] ET AL) 6 June 2019 (2019-06-06) * paragraphs [0010], [0030] – [0031], [0046] * ----- | 1-3 | INV. H04R1/10 H04R25/00 G02C11/06 G06F3/01 ADD. H04R5/027 |

**TECHNICAL FIELDS SEARCHED (IPC)**

H04R
G02C
G06F

The present search report has been drawn up for all claims

| Place of search | Date of completion of the search | Examiner |
|---|---|---|
| The Hague | 21 January 2022 | Fachado Romano, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 3519

21-01-2022

| Patent document cited in search report | | Publication date | Patent family member(s) | | Publication date |
|---|---|---|---|---|---|
| US 2019174237 | A1 | 06-06-2019 | CN | 109922417 A | 21-06-2019 |
| | | | EP | 3496417 A2 | 12-06-2019 |
| | | | US | 2019174237 A1 | 06-06-2019 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOLMQVIST, K.** *A comprehensive guide to methods and measures,* 2015
- **DAVID ALAIS ; DAVID BURR.** The ventriloquist effect results from nearoptimal bimodal integration. *Current biology,* 2004, vol. 14 (3), 257-262
- **MORDVINTSEV ALEXANDER ; REVISION ABID K.** *Fast algorithm for corner detection,* 2013, https://opencv-python-tutroals. readthedocs.io/en/latest/py_tutorials/py_feature2d/py_ fast/py_fast.html
- **MORDVINTSEV ALEXANDER ; REVISION ABID K.** *Shi-tomasi corner detector good features to track,* 2013, https: //opencv-python-tutroals.readthedocs.io/en/latest/py_ tutorials/py_feature2d/py_shi_tomasi/py_shi_tomasi.html
- SURF: Speeded Up Robust Features. **HERBERT BAY ; TINNE TUYTELAARS ; LUC VAN GOOL.** Computer Vision - ECCV 2006. Springer Berlin Heidelberg, 2006, 404-417
- crowd behavior analysis from fixed and moving cameras. **PIERRE BOUR ; EMILE CRIBELIER ; VASILEIOS ARGYRIOU.** Multimodal Behavior Analysis in the Wild, Computer Vision and Pattern Recognition. Academic Press, 2019, 289-322
- **ADELBERT BRONKHORST.** The cocktail party phenomenon: A review of research on speech intelligibility in multiple-talker conditions. *Acta Acustica united with Acustica,* January 2000, vol. 86, 117-128
- MobileFaceNets: Efficient CNNs for Accurate Real-Time Face Verification on Mobile Devices. **SHENG CHEN ; YANG LIU ; XIANG GAO ; ZHEN HAN.** Biometric Recognition. Springer International Publishing, August 2018, 428-438
- Some experiments on the recognition of speech, with one and with two ears. **E. COLIN CHERRY.** The Journal of the Acoustical Society of America. 1953, vol. 25, 975-979
- **C. CHUANQI ; H. XIANGYANG ; Z. ZHENJIE ; Z. MANDAN.** Monocular visual odometry based on optical flow and feature matching. *2017 29th Chinese Control And Decision Conference (CCDC),* May 2017, 4554-4558
- **D. FITZPATRICK ; D. PURVES ; GJ AUGUSTINE et al.** Neuroscience. Sinauer Associates, Inc, 2004

- **J. DELMERICO ; D. SCARAMUZZA.** A benchmark comparison of monocular visual-inertial odometry algorithms for flying robots. *2018 IEEE International Conference on Robotics and Automation (ICRA),* May 2018, 2502-2509
- **KONSTANTINOS G DERPANIS.** Overview of the RANSAC algorithm. *ImageRochester NY,* 2010, vol. 4 (1), 2-3
- **ANTOINE FAVRE-FÉLIX ; CARINA GRAVERSEN ; RENSKJE K. HIETKAMP ; TORSTEN DAU ; THOMAS LUNNER.** Improving speech intelligibility by hearing aid eyegaze steering: Conditions with head fixated in a multitalker environment. *Trends in Hearing,* 2018, vol. 22
- **GUILLERMO GALLEGO ; ELIAS MUEGGLER ; PETER STURM ; ERWIN KRUPPA.** Zur Ermittlung eines Objektes aus zwei Perspektiven mit innerer Orientierung. *arXiv 1801.01454,* 1913, vol. 12
- **D. GEBRE-EGZIABHER ; G. H. ELKAIM ; J. D. POWELL ; B. W. PARKINSON.** A gyro-free quaternion-based attitude determination system suitable for implementation using low cost sensors. *IEEE 2000. Position Location and Navigation Symposium,* March 2000, 185-192
- **ROSS GIRSHICK.** Fast R-CNN. The IEEE International Conference on Computer Vision (ICCV), December 2015
- **ROSS GIRSHICK ; JEFF DONAHUE ; TREVOR DARRELL ; JITENDRA MALIK.** Rich feature hierarchies for accurate object detection and semantic segmentation. *The IEEE Conference on Computer Vision and Pattern Recognition (CVPR),* June 2014
- **MASSIMO GNEO ; MAURIZIO SCHMID ; SILVIA CONFORTO ; TOMMASO D'ALESSIO.** A free geometry model-independent neural eye-gaze tracking system. *Journal of neuroengineering and rehabilitation,* November 2012, vol. 9, 82
- **FREDRIK GUSTAFSSON.** Statistical Sensor Fusion. Studentliterature AB, 2012
- **DAN HANSEN ; QIANG JI.** In the eye of the beholder: A survey of models for eyes and gaze. *IEEE transactions on pattern analysis and machine intelligence,* March 2010, vol. 32, 478-500
- **CHRISTOPHER G HARRIS ; MIKE STEPHENS et al.** A combined corner and edge detector. *In Alvey vision conference,* 1988, vol. 15, 10-5244

- The attentive hearing aid: Eye selection of auditory sources for hearing impaired users. **JAMIE HART ; DUMITRU ONCEANU ; CHANGUK SOHN ; DOUG WIGHTMAN ; ROEL VERTEGAAL.** In Human-Computer Interaction - INTERACT 2009. Springer Berlin Heidelberg, 2009, 19-35
- **RICHARD HARTLEY ; ANDREW ZISSERMAN.** Multiple View Geometry in Computer Vision. Cambridge University Press, 2003
- **P. HOANG ; Z. TAN ; J. M. DE HAAN ; T. LUNNER ; J. JENSEN.** Robust bayesian and maxIMUm a posteriori beamforming for hearing assistive devices. *In 2019 IEEE Global Conference on Signal and Information Processing (GlobalSIP),* November 2019, 1-5
- **JIANBO SHI ; TOMASI.** Good features to track. *In 1994 Proceedings of IEEE Conference on Computer Vision and Pattern Recognition,* June 1994, 593-600
- **RUDOLPH EMIL KALMAN.** A New Approach to Linear Filtering and Prediction Problems. *Transactions of the ASME-Journal of Basic Engineering,* 1960, vol. 82, 35-45
- **SERGEI KOCHKIN ; MARKETRAK V.** Whymy hearing aids are in the drawer'': The consumers' perspective. *The Hearing Journal,* 2000, vol. 53 (2), 34, , 36, , 39, , 41
- **OLEG V. KOMOGORTSEV ; SAMPATH JAYARATHNA ; DO HYONG KOH ; SANDEEPMUNIKRISHNE GOWDA.** Qualitative and quantitative scoring and evaluation of the eye movement classification algorithms. *In Proceedings of the 2010 Symposium on Eye-Tracking Research Applications, ET-RA'10,* March 2010, 65-68
- **ERWIN KRUPPA.** Sitzungsberichte der Mathematisch-Naturwissenschaftlichen Kaiserlichen Akademie der Wissenschaften. *Objektes aus zwei Perspektiven mit Innerer Orientierung,* 1913, vol. 122, 1939-1948
- Quaternions Rotation Sequences: A Primer with Applications to Orbits. **J. B. KUIPERS.** Aerospace and Virtual Reality. Princeton University Press, 1999
- **I.HUNTER ; L. TANGORRA ; L. JONES.** System identification of the human vestibuloocular reflex during head-free tracking. *Journal of Vestibular Research,* September 2004, vol. 14, 419-441
- **DAVID G LOWE.** Object recognition from local scale-invariant features. *In Proceedings of the seventh IEEE international conference on computer vision,* September 1999, vol. 2, 1150-1157
- An iterative image registration technique with an application to stereo vision. **BRUCE D. LUCAS ; TAKEO KANADE.** In Proceedings of the 7th International Joint Conference on Artificial Intelligence. Morgan Kaufmann Publishers Inc, August 1981, vol. 2, 674-679
- **J. L. MARINS ; XIAOPING YUN ; E. R. BACHMANN ; R. B. MCGHEE ; M. J. ZYDA.** An extended kalman filter for quaternion-based orientation estimation using marg sensors. *In Proceedings 2001 IEEE/RSJ International Conference on Intelligent Robots and Systems. Expanding the Societal Role of Robotics in the the Next Millennium,* August 2001, vol. 4, 2003-2011
- **NICOLE MARRONE ; CHRISTINE R. MASON ; JR. GERALD KIDD.** Evaluating the benefit of hearing aids in solving the cocktail party problem. *Trends in Amplification,* 2008, vol. 12 (4), 300-315
- The benefits and user experience of hearing aids controlled by eye gaze of the user. **L. J. NELLEMAN.** Master's thesis. Aalborg University, January 2020
- **D. NISTER.** *An efficient solution to the five-point relative pose problem. IEEE Transactions on Pattern Analysis and Machine Intelligence,* June 2004, vol. 26 (6), 756-770
- Deafness and hearing loss. *World Health Organization,* 2019, https://www.who.int/news-room/fact-sheets/detail/deafness-and-hearing-loss
- **BLIGNAUT PEITER.** Fixation identification: The optIMUm threshold for a dispersion algorithm. *Attention, Perception, Psychophysics,* December 2009, vol. 71, 881-895
- **TOBII PRO.** *Dark and bright pupil tracking,* 11 June 2020, https://www.tobiipro.com/learn-and-support/learn/eye-tracking-essentials/what-is-dark-and-bright-pupil-tracking
- **TOBII PRO.** *Tobii pro glasses 2,* 11 June 2020, https://www.tobiipro.com/product-listing/tobii-pro-glasses-2
- **JOSEPH REDMON ; ALI FARHADI.** Yolo9000: better, faster, stronger. *In Proceedings of the IEEE conference on computer vision and pattern recognition,* July 2017, 7263-7271
- **JOSEPH REDMON ; ALI FARHADI.** *Yolov3: An incremental improvement,* 2018
- **JOSEPH REDMON ; SANTOSH DIVVALA ; ROSS GIRSHICK ; ALI FARHADI.** You only look once: Unified, real-time object detection. *In Proceedings of the IEEE conference on computer vision and pattern recognition,* June 2016, 779-788
- **S. REN ; K. HE ; R. GIRSHICK ; J. SUN.** Faster r-cnn: Towards real-time object detection with region proposal networks. *IEEE Transactions on Pattern Analysis and Machine Intelligence,* 2017, vol. 39 (6), 1137-1149
- **SEÁN G ROBERTS ; FRANCISCO TORREIRA ; STEPHEN C LEVINSON.** The effects of processing and sequence organization on the timing of turn taking: a corpus study. *Frontiers in psychology,* 2015, vol. 6, 509

- Machine learning for high-speed corner detection. **EDWARD ROSTEN ; TOM DRUMMOND.** Computer Vision - ECCV 2006. Springer Berlin Heidelberg, May 2006, 430-443
- **ETHAN RUBLEE ; VINCENT RABAUD ; KURT KONOLIGE ; GARY BRADSKI.** *ORB: an efficient alternative to SIFT or SURF,* November 2011, 2564-2571
- **DARIO SALVUCCI ; JOSEPH GOLDBERG.** *Identifying fixations and saccades in eye-tracking protocols,* November 2000, 71-78
- **D. SCARAMUZZA ; F. FRAUNDORFER.** Visual odometry. IEEE Robotics Automation Magazine, 2011, vol. 18, 80-92
- **SHUSTER ; MALCOLM D.** A survey of attitude representations. *Navigation,* 1993, vol. 8 (9), 439-517
- **W.E. HAMILTON ; SIRW.R. HAMILTON.** Elements of quaternions. Longmans, Green, Co,
- **G.L. SMITH ; S.F. SCHMIDT ; L.A. MCGEE.** Application of statistical filter theory to the optimal estimation of position and velocity on board a circumlunar vehicle. *Technical Report TR R-135,* 1962
- **Y. TIAN ; W. R. HAMEL ; J. TAN.** Accurate human navigation using wearable monocular visual and inertial sensors. *IEEE Transactions on Instrumentation and Measurement,* 2014, vol. 63 (1), 203-213
- **TOBII PRO.** The address of the publisher. *Tobii Pro Glasses 2 API Developer's Guide,* August 2018
- Local invariant feature detectors: A survey. *Tinne Tuytelaars and Krystian Mikolajczyk,* 2008, vol. 3 (3), 177-280
- **D. UNSAL ; K. DEMIRBAS.** Estimation of deterministic and stochastic IMU error parameters. *In Proceedings of the 2012 IEEE/ION Position, Location and Navigation Symposium,* April 2012, 862-868
- **A. VILLANUEVA ; R. CABEZA.** A novel gaze estimation system with one calibration point. *IEEE Transactions on Systems, Man, and Cybernetics, Part B (Cybernetics),* 2008, vol. 38 (4), 1123-1138
- **FENG YURI.** *Real time face recognition with cpu,* 2019, https://towardsdatascience.com/ real-time-face-recognition-with-cpu-983d35cc3ec5
- **Y. ZHANG ; W. LIANG ; H. HE ; J. TAN.** Wearable heading estimation for motion tracking in health care by adaptive fusion of visual-inertial measurements. *IEEE Journal of Biomedical and Health Informatics,* 2018, vol. 22 (6), 1732-1743
- **ELANA ZION GOLUMBIC ; GREGORY B. COGAN ; CHARLES E. SCHROEDER ; DAVID POEPPEL.** Visual input enhances selective speech envelope tracking in auditory cortex at a "cocktail party. *Journal of Neuroscience,* 2013, vol. 33 (4), 1417-1426